(19) **Europäisches Patentamt**

**European Patent Office**

**Office européen des brevets**

(11) **EP 0 872 819 B1**

(12) **EUROPEAN PATENT SPECIFICATION**

(45) Date of publication and mention
of the grant of the patent:
**02.10.2002 Bulletin 2002/40**

(51) Int Cl.⁷: **G09B 9/16**, G09B 9/30,
G09B 9/46

(21) Application number: **98302871.3**

(22) Date of filing: **14.04.1998**

(54) **Training simulators**

Trainingssimulatoren

Simulateurs d'entraînement

(84) Designated Contracting States:
**ES FR GB**

(30) Priority: **14.04.1997 US 837118**

(43) Date of publication of application:
**21.10.1998 Bulletin 1998/43**

(73) Proprietor: **Lockheed Martin Corporation**
**Orlando, Florida 32825-5002 (US)**

(72) Inventor: **Pollak, Eytan**
**Oviedo, Florida 32825 (US)**

(74) Representative: **Fenlon, Christine Lesley et al**
**Haseltine Lake & Co.,**
**Imperial House,**
**15-19 Kingsway**
**London WC2B 6UD (GB)**

(56) References cited:
**EP-A- 0 368 458      EP-A- 0 476 920**
**EP-A- 0 483 991      EP-A- 0 483 992**
**WO-A-97/00106      US-A- 5 490 783**
**US-A- 5 509 806**

Printed by Jouve, 75001 PARIS (FR)

**Description**

The invention pertains to training simulators.

Simulators for training drivers, and/or pilots in connection with various types of vehicles or platforms are known. Such simulators often provide a graphical display as well as representative mechanical structure corresponding to the control functions of the respective vehicle. Known simulators have been dedicated to a single type of vehicle.

As training needs change, in response to evolving vehicles or different threat patterns, it becomes desirable to be able to provide either updated or completely different simulators. The new simulators must be cost-effective in addition to meeting changing training needs. This in turn tends to make the existing equipment obsolete.

Apart from the problem of obsolescence, dedicated simulation systems are not intended to faithfully simulate a plurality of different vehicles or platforms. Hence, they are not useful in responding to changing mixes of training needs. Further, many of the known simulator systems tend to be bulky and are not readily movable from one location to another. US 5 509 806 shows a portable multiple module simulator apparatus.

Thus, there continues to be a need for simulators which are more flexible than known simulators and which can be used in a variety of training exercises. There also continues to be a need for readily deployable simulators.

According to an aspect of the present invention, there is provided a reconfigurable simulator comprising: a base representing a platform to be simulated; a control unit coupled to the base; a plurality of hardware modules, removably engageable with the base, wherein the modules present a differing simulation environment corresponding to the platform to a user and wherein the control unit includes a storage medium wherein a plurality of software based control modules is stored and accessible by the control unit wherein some members of the plurality of hardware modules are adapted to interact with respective ones of the control modules thereby enabling the control unit to present to a user a plurality of different simulation experiences as the platform moves in a simulated environment and wherein the control unit includes an icon driven configuration editor for modifying characteristics of the platform. A method for simulating a platform is also provided.

Such a modular hardware and software configuration can result in a versatile, deployable system that can be quickly transformed into one of a plurality of platforms. Interchangeable control modules make for quick alteration of instruments, controls, switches, knobs, buttons, etc. and their functionality for training, virtual prototyping, and mission rehearsals on different configurations of the same system.

The system can be reconfigured from one vehicle to a completely different vehicle in just minutes using prestored control software and interchangeable vehicle personality kits. For example, the system can be reconfigured from an attack helicopter cockpit to a tank gunner's compartment (two completely different types of platforms requiring vastly different vehicle dynamics, functionality, and crew station components). Both hardware and software can be reconfigured between these two very different configurations in less than 15 minutes.

Both the hardware and software architecture of the system are preferably designed with a reusable core along with modular and flexible components. This design results in ease of expendability for future configurations, platforms, and enhancements. System architecture results in a selective fidelity platform simulator.

System hardware modularity is desirably per person. Each simulator crewstation may consist of a common base or "sled", and one vehicle "kit".

The sled may have a frame/base structure and a seat. The frame/base structure may be designed such that multiple vehicle "kits" may be easily mounted on the base to rapidly configure the sled for a particular vehicle or platform to be simulated.

In one embodiment, the physical size of the frame is such that it will pass through a standard 30-inch wide door without any extreme difficulty. No component of the system requires more than a two-man lift. All components can break down for easy shipment and deployability without major disassembly. Hence, this design lends itself not only to rapid modification from one platform to another, but also to ease in shipment and reassembly for field deployment.

The sled's electrical system may communicate with a local host computer by means of an Electrical Interface Device (EID) design that provides a minimum update rate of 60 Hz for true real-time simulation. The EID may communicate with the host computer through an Ethernet interface.

An image generator (IG) may provide the number of display channels and fidelity needed for the vehicle being simulated. The system may support interfaces for a plurality of different image generators. The IG can be configured to provide imagery to the applicable vehicle displays, e.g., panel mounted sensors, fixed flat panel out the window (OTW), and helmet mounted displays (HMD).

A PC-based instrumentation package can be used to provide simulated, real-time instrumentation that is displayed in each reconfigurable crewstation. This approach of functionally simulating the crewstation instruments electronically provides an ability to maintain high fidelity of critical gauges and instruments at a low cost. The rendered instruments may be anti-aliased, providing for realistic moving gauges and indicators.

The instrumentation software design can provide an ability to reconfigure, change or edit instrument displays and heads-up displays in real time, using a graphical user interface at both the host computer and the simulator cockpit or crewstation. Instrument attributes may be updated by the host computer through an Ethernet interface.

The system may support a variety of different output display devices. Out the window display system options include flat panel plasma monitors, dome, or Helmet Mounted Display devices. The helmet mounted display provides see-through capability allowing full visibility of cockpit instruments and controls, as well as permitting visual interaction between crew members. A sensor/targeting monitor with 1X, 3X, and 18X field of view can be provided depending on the platform.

A digital audio communication system can be used for intercom communication between crew members, as well as communication between participating members of a distributed interactive simulation. In addition, the communication system may provide an aural cue capability. Realistic vehicle and simulation sounds, can be provided to the crew members.

The sleds can be configured in a number of different combinations to simulate a particular vehicle. A single crewstation simulator may be created by using one reconfigurable base/sled and one vehicle kit. For training multiple crew members, two bases/sleds may be linked together in a tandem or side-by-side configuration and two vehicle kits are utilized.

System architecture may include three layers: Core Services Layer, a software application layer which includes application segments, and a platform specific, hardware related layer.

Each layer is isolated itself from the previous layer, resulting in a loosely coupled system architecture. This permits use of the Core Services Layer for all-simulator design applications. In addition, potential reuse and reconfigurability of software modules and hardware components based on specific vehicle and a desired level of fidelity may be enhanced.

The Core Services Layer resides on top of the operating system of the host processor. In addition to providing services, it isolates the application layer from the underlying operating system and hardware.

The Core Services Layer may provide a message-based communication mechanism for the application layer. This includes application generic service calls, which consist of, but are not limited to, operating system calls, interprocess communication calls, shared resources, and task scheduling. The Core Services Layer can also provide a mechanism for synchronizing segment processing to external timing or to message delivery.

Each application segment may communicate with other segments over a virtual network using software calls supported by the Core Services Layer. The virtual network implementation manages how the messages are read and/or written by the segments.

Segments running on the same host processor may communicate through shared memory. Segments running on remote hosts may communicate over a local area network, such as an Ethernet, through a Remote Core Services Layer. All message passing is handled by the Core Services Layer, making interprocessor communications transparent to the user.

Hence, the Core Services Layer, residing on each of a group of linked host processors, may implement a multiprocessor network architecture that is transparent to an application segment being executed on a "primary" host. Application segments may all be executed on a primary host where there is only one processor. In a multi-processing environment, the exact processor on which, a given segment will execute may vary.

The Core Services Layer may manage application segment and message information through use of a configuration file. This file is created through use of a file editor having graphical user interface. A configuration file is associated with each platform that can be simulated. For prototyping, configuration files can be created for platforms under development which do not exist in a physical sense.

The file editor can provide the ability to create and save new configuration files or open and modify existing configuration files. Through this editor, messages and segments can be visually added, deleted, or modified, and the user can assign the platform and processor on which each segment will run.

The application software layer may include several independently executing integrated segments, each of which can be implemented in a high-level language. These segments are groups of objects or functions closely related to one another internally. They are loosely coupled to objects or functions in other segments. Main segments can include: Vehicle Controls Segment, Environment Segment, Mission Functions Segment, Vehicle Dynamics Segment, Visuals Segment, Weapons Segment, Navigation Segment, Instructor Segment, Electronic Warfare Segment, Crewstation Segment, Physical Cues Segment, and a DIS Input/Output Segment.

Segments can be generated through the use of the Core Services Layer, the graphical user interface, manually, or by using commercial off-the-shelf modeling tools. Real-time vehicle dynamics and models and weapons systems can be conveniently developed using these tools. After model development and validation have been completed, the modeling tools can provide a capability to convert the system block diagrams directly to compiled real-time executable software. This code generation capability allows the vehicle dynamics and weapons models to be rapidly changed by an operator to match future vehicle upgrades.

The application layer segments are modular and loosely coupled, allowing changes in these segments or additions of other segments required for different vehicle simulators to be easily integrated. Furthermore, existing segments may be reused for several different vehicle configurations.

Reference will now be made, by way of example, to the accompanying drawings, in which:

FIGURE 1A is a diagram illustrating a layered architecture in accordance with the present system;
FIGURE 1B is a hardware block diagram of the present system;
FIGURE 1C is a view of a main window presented by a graphical editor of the present system;
FIGURE 1D illustrates a block diagram specification of dynamics of a selected vehicle;
FIGURES 2 and 2A are exploded views, partially in perspective, of a modular crewstation in accordance with the system of FIGURES 1A and 1B;
FIGURES 3 and 3A are perspective views of a particular form of a two-person platform being simulated;
FIGURE 4 is a view illustrating an instrument defining template in combination with a flat panel plasma display;
FIGURE 5 illustrates the arrangement of FIGURE 4 with simulated instruments and meters being displayed along with mechanically operable switches;
FIGURE 6 illustrates a block diagram of one particular electronic implementation of the platform being simulated in FIGURE 3;
FIGURES 7 and 7A are diagrams illustrative of a dual module simulation device based on the modular unit of FIGURE 2;
FIGURE 8 is an enlarged perspective view illustrating details of the central console of the system of FIGURE 7;
FIGURE 9 is a view of yet another single crewstation configuration;
FIGURE 10 is a block diagram illustrating types of message buses;
FIGURE 11 is a graphical representation of the configuration file of Exhibit A;
FIGURE 12 is a window illustrating graphically various types of configuration files available for a selected class vehicle; and
FIGURE 13 is a window illustrating various types of selectable segment icons.

While the present invention is susceptible of embodiment in various forms, there is shown in the drawings and will hereinafter be described a presently preferred embodiment, with the understanding that the present disclosure is to be considered as an exemplification of the invention, and is not intended to limit the invention to the specific embodiment illustrated.

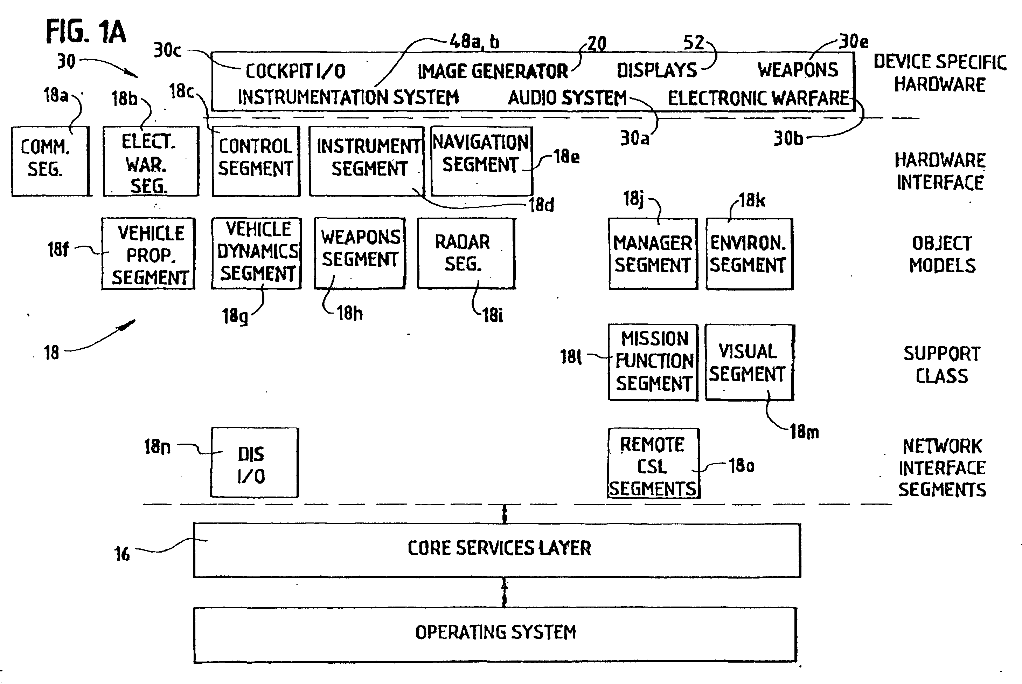

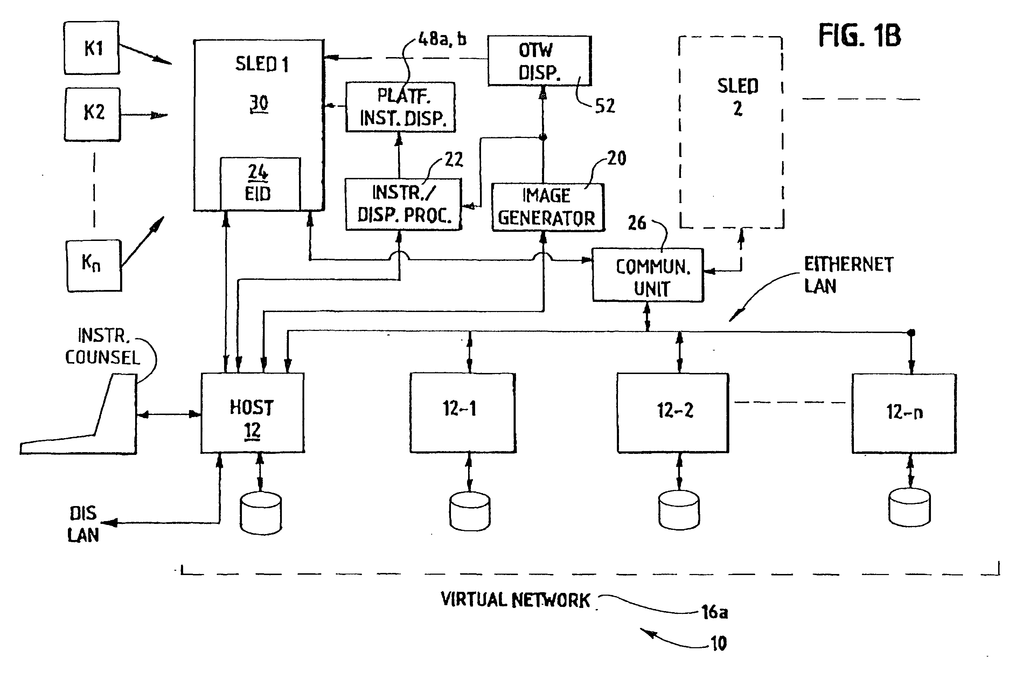

FIGURES 1A and 1B illustrate various aspects of a system 10 embodying the present invention. The system 10 incorporates at least one host processor generally indicated at 12. The processor 12, could, for example, be implemented as using a workstation of a type commercially available.

A SUN workstation, with a Solaris 2.4 Operating System can be used as the platform for the reconfigurable host 12. The host computer 12 contains hardware to interface with an image generator 20, an instrument computer 22 to drive an instrument display on the sled 30, and an electrical interface device (EID) 24 carried on a sled 30. A digital communications module 26 provides communication between sleds such as 30 and 30'. The software for the system 10 is portable to other UNIX work stations and to PCS.

The Image Generator (IG) 20 provides a number of display channels for the desired vehicle simulator. The IG 20 is configured to display the desired level of fidelity for the simulation application. The IG communicates to the host computer 12 through an Ethernet interface.

The IG 20 is configured to provide imagery to the applicable vehicle displays, e.g., panel mounted sensors, fixed flat panel Out-the Window (OTW), and Helmet Mounted Display (HMD) with see-through capability. The system includes standard interfaces for use with commercially available generators such as the Lockheed Martin COM-PU-SCENE SE, PRO 1000 IG products, and Silicon Graphics IG products.

The computer 22 with instrumentation software is used to render the real-time instrumentation displayed in each reconfigurable cockpit. An Evans and Sutherland AVIDS software tool can be used to develop and configure the instrument displays. The instrumentation design permits changes or editing of instrument displays and heads up displays in real time, using a graphical user's interface at both the host computer workstation 12 and the simulator cockpit 30. The Instrumentation PC 22 communicates with the host computer 12 through an Ethernet interface.

The display system 20 is designed with maximum flexibility, allowing the system to match specific user needs or specifications in terms of Field-of View (FOV), magnification, and resolution. The current display system uses multiple flat panel displays for OTW imagery and high resolution monitors for sensor/targeting imagery.

A HMD type display may be used with the system 10 in lieu of monitors and flat panel displays or in addition to them, as the user desires. The HMD provides see-through capability, allowing full visibility of cockpit instruments and controls as well as permitting visual interaction between crew members. All monitors, flat panel displays, and the HMD can be adjusted within limits to meet user needs.

The image generator 20 provides multiple channel, through the window-type views of a terrain in the immediate area of the platform being simulated. A plurality of image generators (not illustrated) 20h....20n can be provided so that a plurality of different displays can be used with the system 10.

Selection of a type of output display will be based on balancing considerations such as cost, type of platform, and level of fidelity needed in the output display so as to provide an adequate level of training for the user of the platform being simulated. To facilitate conversion from one type of image generator to another, a plurality of different visual segments can be stored in the system 10. A particular image generator can be specified by an instructor's console coupled to processor 12.

The processor 12, in addition to an operating system of a type usable with such workstations, also supports a Core Services Software Layer (CSL) generally indicated at 16. The Core Services Layer 16 provides services of the type described below to a plurality of application layer object oriented segments indicated generally at 18. The CSL 16 can also facilitate communications via the operating system, with a plurality of device-specific hardware structures generally indicated at 30.

Some of the segments communicate with devices in the plurality 30 without using CSL 16. These include the Control Segment, the Instrument Segment, and the Navigation Segment.

The core services layer 16 can also be used to provide transparent communications to and from a remote host, such as 12-l, 12-n, as part of a local area, virtual, network 16a. The remote host might in fact be responsible for executing one or more of the members of the plurality of application layer segments 18.

The "virtual" network 16a might include just the host 12. Alternately, it might additionally include remote hosts 12-1, 12-2 ... 12-n. Implementation of distributed systems is discussed in Distributed Systems, Ed. by S. Mullender, U of Twente Netherlands, ACM Press, 1993.

The architecture of the system 10 provides an open, scalable, reconfigurable, and modular architecture for simulation software applications. As illustrated in FIGURE 1A, each layer of the system architecture isolates itself from the previous layer.

The Core Services Layer 16 (CSL), provides a message based communication mechanism for the application layer 18. The application layer 18 includes object-like software segments that read and write messages using the CSL functions. The object oriented approach in simulation has been discussed in Object Oriented Modeling And Design, J. Rumbaugh, Prentice Hall, 1991.

The segments are characterized by the messages they read and write, as well as the hardware with which they interface. This modularity allows each segment to be easily modified or replaced without impacting the rest of the system.

The CSL 16 isolates the application segments 18 from the underlying operating system and hardware. The CSL provides application generic service calls, which include, but are not limited to, operating system calls, inter-process communication calls, shared resources, and task scheduling.

The application layer 18 includes of several independently executing integrated segments, each of which can be developed in a high level language such as ADA. These segments are groups of objects or functions closely related to one another internally and are loosely coupled to objects or functions in other segments. The segments communicate between themselves via messages on the virtual network 16a implemented by the CSL.

FIGURE 1A illustrates exemplary main segments of a typical application layer usable to implement a variety of simulating of different platforms. These include: hardware interface segments, object model segments, support segments and network interface segments. The interface segments include Communications 18a, Electronic Warfare 18b, Controls 18c, Instruments 18d, Navigation 18e, in a hardware interface level. Vehicle Propulsion 18f, Dynamics 18g, Weapons 18h, and Radar 18i, along with Manager Segment 18j and an Environment Segment 18j make up an object model level. Support segments include Mission Function 181 and Visuals 18m. Network interface segments include DIS I/O 18n and Remote CSL segments 18o.

All segments are loosely coupled, so changes in these segments or additions of other segments required for different vehicle simulators are easily integrated. Existing segments may be reused for several vehicle configurations. For example, only vehicle controls, vehicle dynamics, and weapons need to be altered to convert from an AH-64 to a UH-60 helicopter configuration as discussed subsequently.

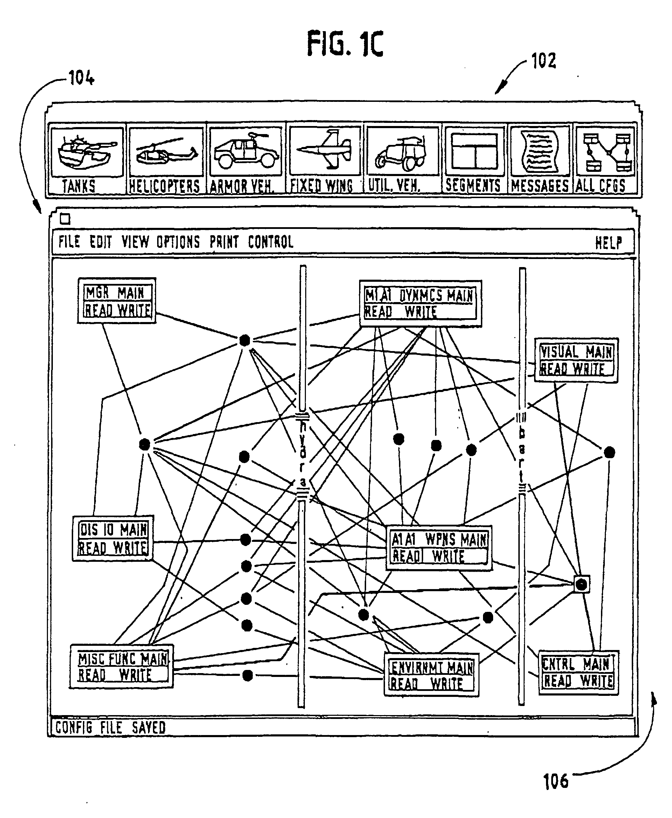

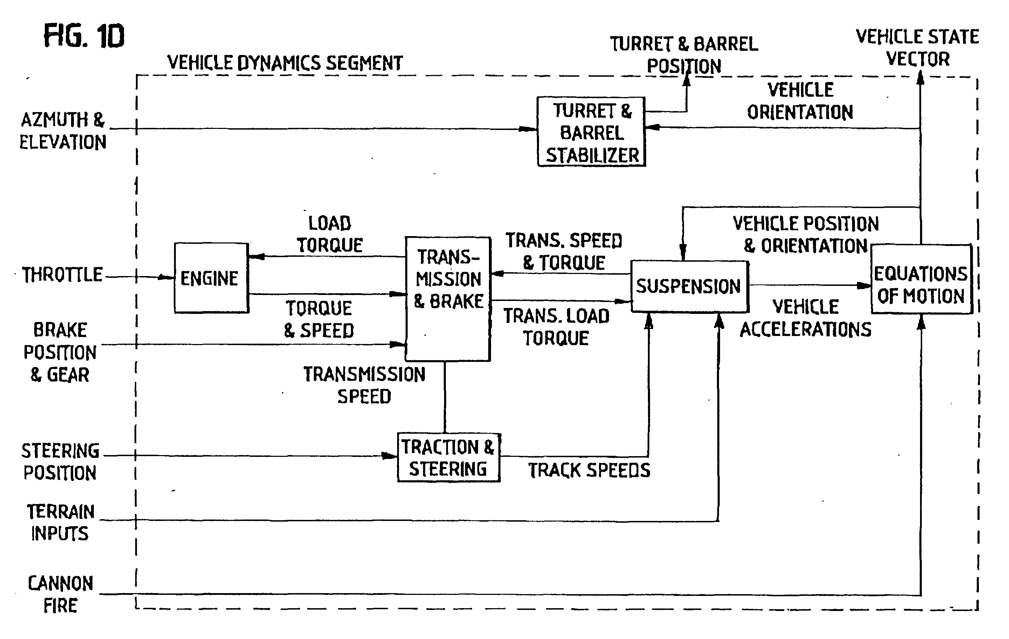

The CSL 16 manages the segments through use of a configuration file. Information regarding segments and messages used in the simulation is stored in the file. An editor with an icon driven graphical user interface is available as part of the CSL allowing the creation, saving, or modification of existing configuration files. FIGURE 1C illustrates a user manipulatable main window for the editor.

Segments may be generated in executable form once they have been defined in the Graphical User Interface, illustrated in FIGURE 1C, using commercially available modeling tools. Real-time flight dynamics and models and weapons systems can be developed using a software package, Matrix X (Trade Mark of Integrated Systems Inc.).

Matrix X is a commercially available software simulation package used to develop and analyze models of multiple input/multiple output nonlinear systems. This software package allows a user to create models using a graphical user interface. Icons are connected to form block diagrams of the modeled system. The icons represent mathematical operators which the program uses to produce and solve systems of equations. Fig. 1D illustrates a vehicle dynamics segment represented in block diagram form.

Matrix X provides the analysis tools (such as curve fitting routines, frequency response computation, plotting routines, etc.) needed to develop, analyze, and validate flight dynamics models. After completion of model validation, Matrix X provides the capability to convert the system block diagrams directly to real time software in languages such as ADA or C. This same capability allows the flight dynamics model to be rapidly changed by the user to match future aircraft upgrades.

The electrical system utilizes an Electrical Interface Device (EID) 24 which provides a minimum update rate of 60 Hz for true real-time simulation. This update rate is especially important for flight vehicle simulators. The modular EID 24 utilizes commercially available components and supports expendability. The EID communicates to the host computer 12 through an Ethernet interface.

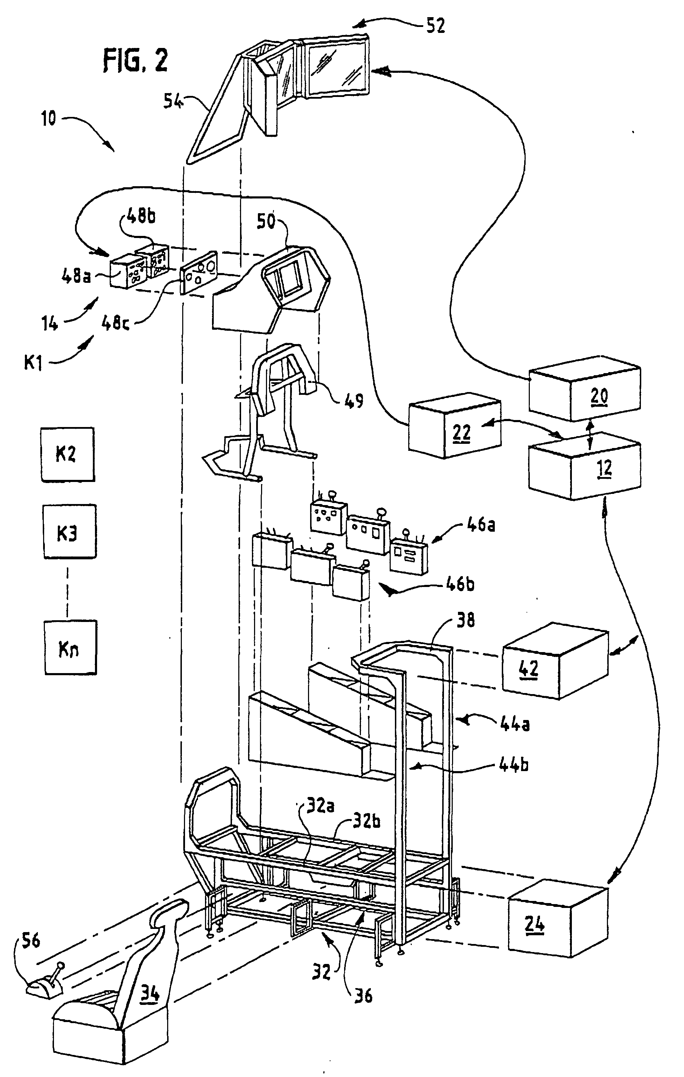

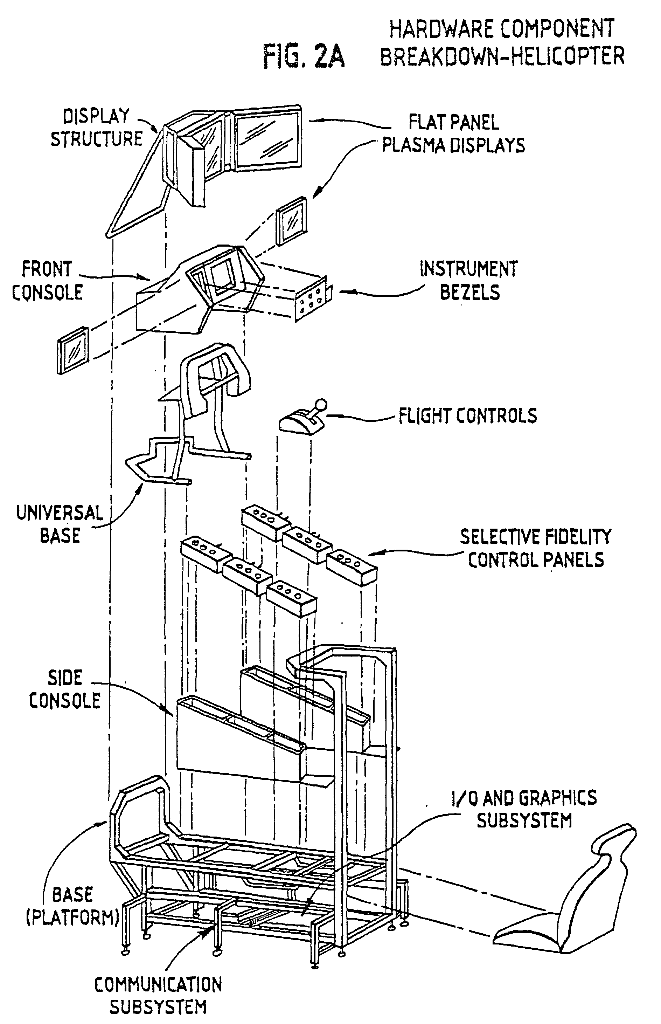

FIGURES 2 and 2A illustrate a form of the simulator or training module 30. The module 30 is particularized for a specific platform and/or simulation exercise by using one member of a plurality of multi-personality, platform kits K1, K2...Kn.

A common one-person hardware frame or sled 32 is the basic building block for the module 30. The frame or sled 32 is associated with an individual operator or member of the platform crew.

The frame/base structure 32 is designed so multiple vehicle "kits" may be easily mounted on the base to rapidly configure a particular vehicle simulator. The frame structure design includes easily assembled/disassembled members. Power and data distribution cables are concealed within the frame's tubular design. The frame houses all power, video, and data interface connections.

Each frame is equipped with free rotating castors for easy transport, and leveling pads for use when in position for training. No component of the assembly requires more than a two man lift. All components break down for easy shipment without major disassembly and pass through a standard 30 inch door.

The frame 32 includes a seat 34 intended to be used by the individual crew person associated with that particular aspect of that platform. Single crew or multiple crew platforms can be simulated as described subsequently.

The frame 32 provides a lower region, generally indicated at 36, for receipt of power supplies, electronics, connectors, and I/O interface electronics (the EID) generally indicated at 24. The frame 32 provides an upper mounting region 38 to which a heads-up projection display system 42 can be mounted. As an alternate to the display system 42, the operator can be provided with the helmet-mounted display unit.

The standardized frame 32 can be personalized to a particular platform by use of platform-specific kits such as K1, K2 ...Kn. Kit K1 is illustrated with the sled 32.

Kit K1 provides platform-specific control and displays by using, for example, removable consoles 44a, 44b, which would correspond to the configuration, appearance, and arrangement as expected to be found in the platform being simulated. The consoles 44a, 44b are removably attachable to side members 32a, 32b of the frame 32.

To further conform the appearance of the unit 32 to that of a specific platform, the consoles 44a, 44b are adapted to receive a plurality of control modules indicated generally at 46a and 46b. The control modules 46a, 46b removably engage the console members 44a, 44b and are also of a type which would be expected to be found in the platform being simulated.

The control modules 46a, 46b can include switches, levers, or dials which can be operational, in which event they are in communication with the interface system 24. Alternately, depending on the nature and purpose of the simulation or training exercise, the members of the plurality 46a, 46b could be merely graphical depictions of certain control elements which, are unimportant or irrelevant from the point of view of a particular simulation or training exercise to be carried out.

The frame 32 can be further configured to exhibit the personality of the platform being simulated by the addition of platform-specific display devices or instruments 48a, 46b which are supported in appropriate orientation and arrangement at the front end of the frame 32 as would be expected for the platform being simulated. It will be understood that the devices 48a, 48b could be computer-driven display devices which are intended to simulate actual instruments or displays found in the platform being simulated.

The displays 48a, 48b could be, for example, flat panel plasma displays. The displays 48a, 48b can be coupled to and be in communication with the instrument computer 22. The displays 48a, 48b can be driven by channels of the image generator 20 and updated locally by an instrument simulating computer 22.

Overlying the displays 48a, 48b is template 48c which corresponds to the shape and appearance of the instruments being simulated, and covers the edges of the template 48c. A frame 49 supports the displays 48a, 48b. A bezel structure 50 of a type which would correspond to the appearance of the instrument panel of the platform being simulated. A user located in the seat 34, when looking toward the bezel 50 and the computer-driven displays 48a, 48b, would see a plurality of platform sensors, instruments, gages, and display devices exactly corresponding to those found in the platform being simulated.

Out-the-window displays 52 are provided by one or more display devices, which might, for example, be flat panel plasma displays, for the purpose of providing to the user a view of a simulated adjacent terrain in which the platform being simulated is located and possibly moving. The display units 52 are configured and oriented so as to duplicate the arrangement of the windows, if any, of the platform being simulated. The displays 52 are mounted and held in an appropriate orientation by a mechanical framework 54 which is intended to couple to the frame 32.

The device interface circuitry 24 is in bi-directional communication with the host computer 12. The host computer 12 is, in turn, in communication with the hardware display or image generator 20 which presents three-dimensional displays on the display elements 52.

The system 10 supports a plurality of different image-generation systems which in turn drive a plurality of different display devices of varying fidelity depending on platform requirements and costs.

It will be understood that the system 10, as illustrated in FIGURE 2, can be used to create both visually and mechanically correct modularly based structures which simulate the appearance and behavior of a platform being simulated.

Platform controls are provided by platform-specific joy sticks, levers, steering wheels, or rudder controls, generally indicated at 56 which are intended to be releasably coupled to the frame 32. These control elements are all in communication with the interface circuitry 24.

The module 30 can include additional platform specific hardware not noted above. For example, an audio subsystem 30a coupled to communications unit 26, can be used to provide audible cues and realistic vehicle simulation sounds to crew members to enhance the realism of the simulation. An electronic warfare subsystem 30b implements the electronic warfare capabilities, if any, of the vehicle being simulated. Cockpit module 30c provides additional manually operable cockpit controls including switches, knobs, joy sticks, control levers, and the like which would be associated with the operation of the vehicle being simulated. A weapons subsystem module 30e provides weapons-related functionality enabling the user to control or activate weapons of a type associated with the platform being simulated.

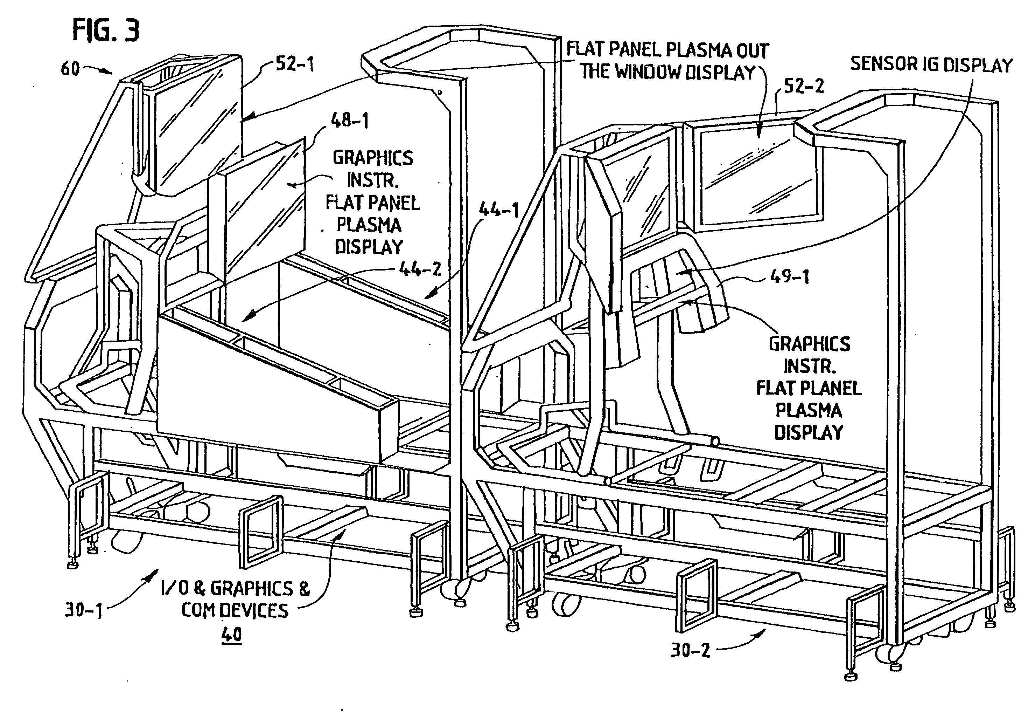

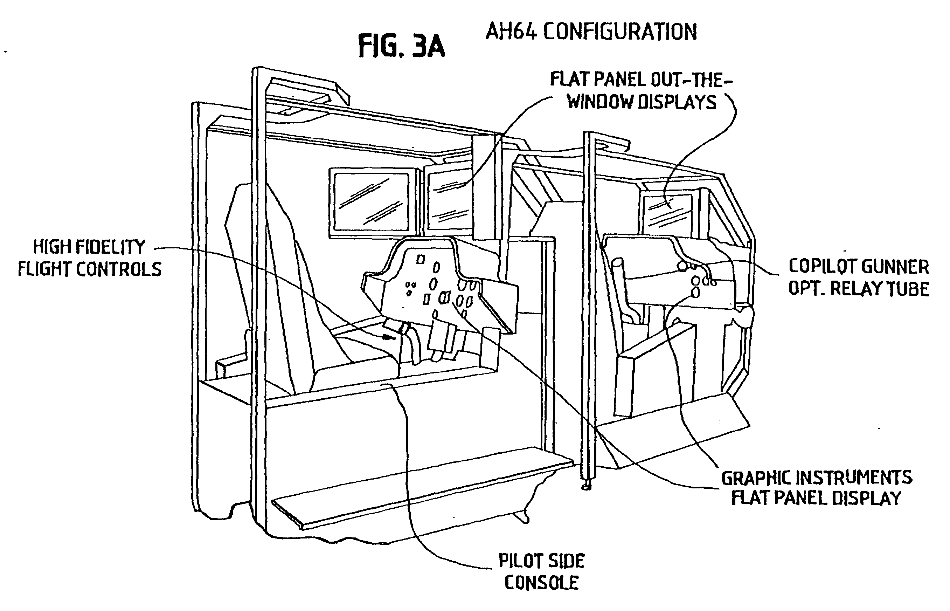

FIGURES 3 and 3A illustrate a system 60 having a tandem configuration wherein two frames 30-1, 30-2, of the type previously discussed, are arranged to correspond to the cockpit of an AH64A attack helicopter. Frame 30-1 has been configured to correspond to the displays and controls for a copilot/gunner. Frame 30-2 has been configured with another kit to correspond to the controls and displays of a pilot. An outer shell covers each crewstation to provide a representation of an enclosure.

Frame 30-1 has been configured with modules, such as console modules 44-1, 44-2 which correspond to a personality kit for the co-pilot/gunner portion of the AH64A helicopter. Similarly, frame 30-2 carries a personality kit which configures it to conform to the appearance of the pilot's control elements, displays, and gauges of the AH64A helicopter.

The two sled configuration utilizes a five channel IG which drives the OTW displays and the sensor displays. A three channel instrumentation system is used to provide real-time instrumentation within each crewstation. In addition, navigation and radio communication capabilities have been provided.

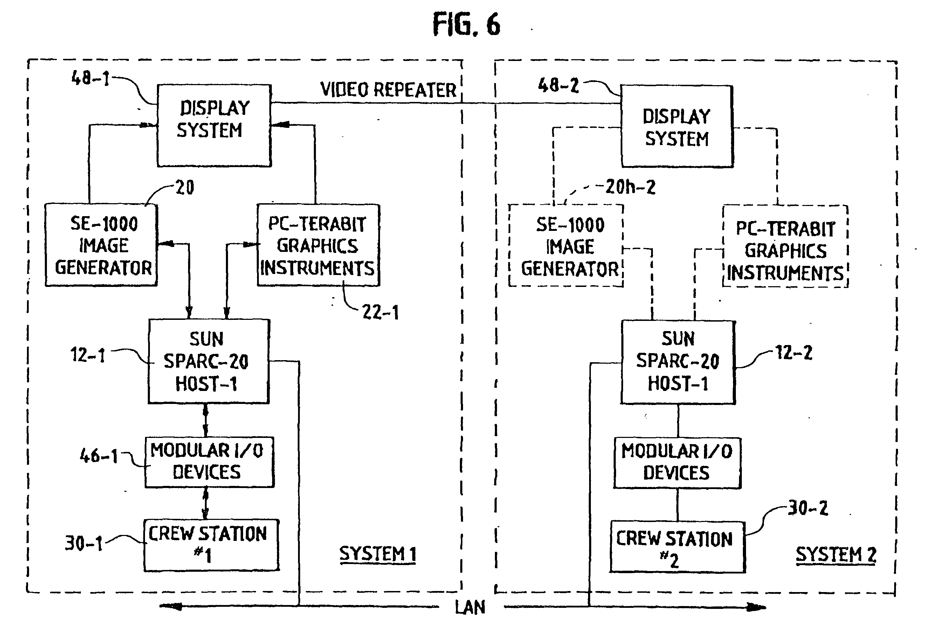

The AH64A pilot station kit consists of the front and side console assemblies, including all instruments, switches, and indicators determined to be critical for training. The cyclic, collective, and pedal assembly provide realistic simulator controls. OTW imagery is provided by either three plasma displays, or a head tracked HMD. The simulated sensor video display unit (see FIGURE 6) is a repeat of the copilot/gunner's sensor view.

The AH64A copilot/gunner station kit consists of front and side console assemblies, including all critical switches, instruments, and indicators. The gunners Optical Relay Tube (ORT) is provided, including gunnery switches and controls, a Heads Down Display (HDD) and the Heads Out Display (HOD). Through the HDD, the gunner has the ability to switch between OTW and sensor display. The pilot's OTW view is repeated in the copilot/gunner's crewstations.

It will be understood that the frames 30-1 and 30-2 would each incorporate a template and a bezel, corresponding to the bezel 50, for the purpose of covering flat panel plasma display 48-1, 49-1, corresponding to the displays 48a and 48b, for example. This will present an optical appearance to the individuals participating in the simulation as the pilot and co-pilot which corresponds to the overall appearance of the interior of the corresponding cockpit.

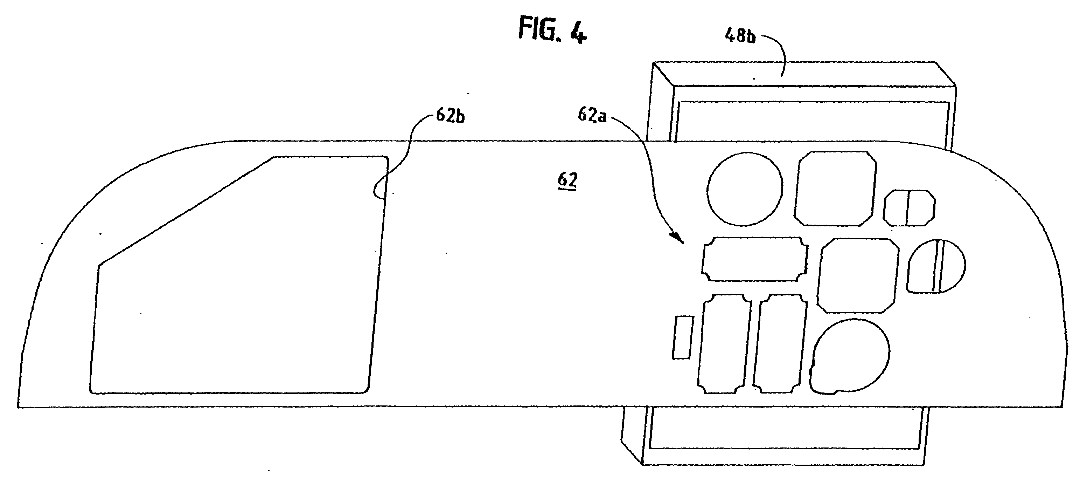

FIGURE 4 illustrates for one of the cockpit displays, for example, the display 48b, the use of an overlying template 62. The template 62 could be part of, or attachable to, a bezel, such as the bezel 50.

The template 62 includes a number of cut-outs illustrated generally at 62a which correspond to the instruments and displays of, for example, the AH64A cockpit. Hence, the computer-generated displays of instruments, gauges, output indicators, and the like, presented on the flat panel display 48b, by means of the template 62, can faithfully replicate the appearance of the corresponding devices that are actually present in the cockpit.

The template 62 also carries an open region 62b which can be for the purpose of presenting another display of the type which would be found in the respective cockpit. Alternately, the opening 62b can receive a modular control element found in the corresponding aircraft at that location for purposes of replicating the structure which would be seen by one of the crew members in that aircraft.

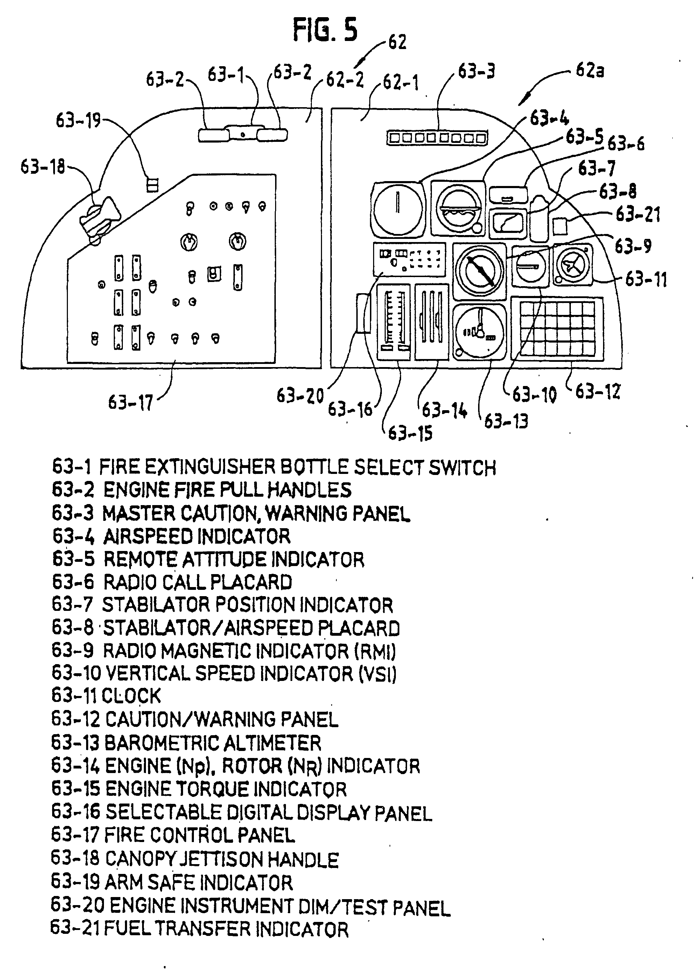

FIGURE 5 is a further illustration of template 62 having two sections 62-1 and 62-2. The section 62-1 carries the plurality of cut-outs 62a illustrated in FIGURE 4. As illustrated in FIGURE 5, those cut-outs correspond to and frame a plurality of simulated gauges, indicators, and displays 63-4 through 63-16, 63-20 and 63-21.

The portion of the template 62-2 carries a plurality of control switches and the like including elements 63-1, 63-2, and 63-17 through 63-19.

Signals received from the control elements 63-1, -2, and 63-17 through -19 can be made available to the host processor 12 via interface element 24. Similarly, the displays presented on the portion of the template 62a are driven from commands produced by the display computer 22 and transferred to the flat panel display 48b.

FIGURE 6 is a block diagram illustrating various aspects of one implementation of the system 60 where each of the crewstations 30-1 and 30-2 has associated therewith its own host processor 12-1 and 12-2.

The host processor 12-1 in turn provides signals to drive image generator 20. Host 12-1 is also in bi-directional communication with instrument display processor 22-1 which is used to generate and to update the real-time instrument display, such as the display 48-1, illustrated in FIGURE 5, of cockpit indicators and instruments. These images can be replicated on station 2, display 48-2.

The system design incorporates commercial components and commercial interface standards to minimize cost and provide maximum expendability. Using commercial components and an architecture consisting of well-defined system modules, the design provides for ease of fault detection and isolation, interchangeability, and replacement of parts. The modular system design also allows future expansion for new vehicle kit configurations, and incorporation of new technologies with minimal non-recurring cost.

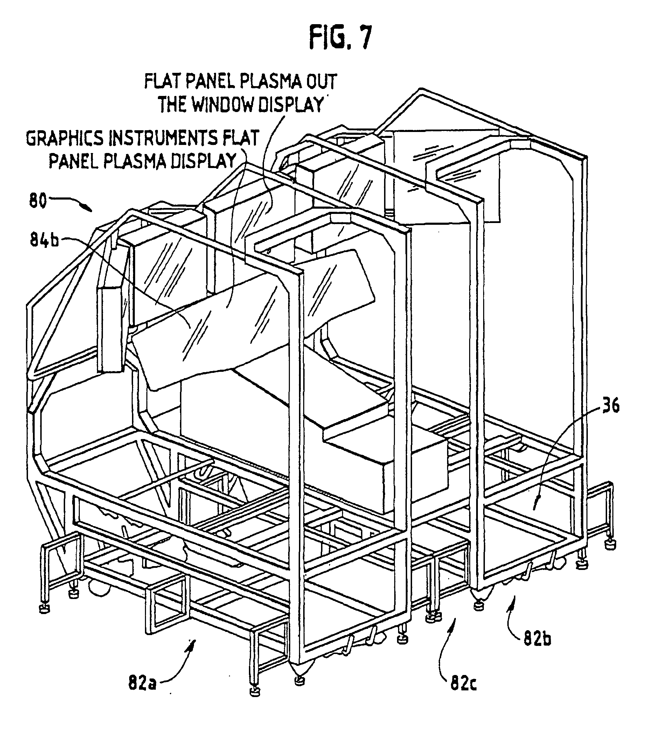

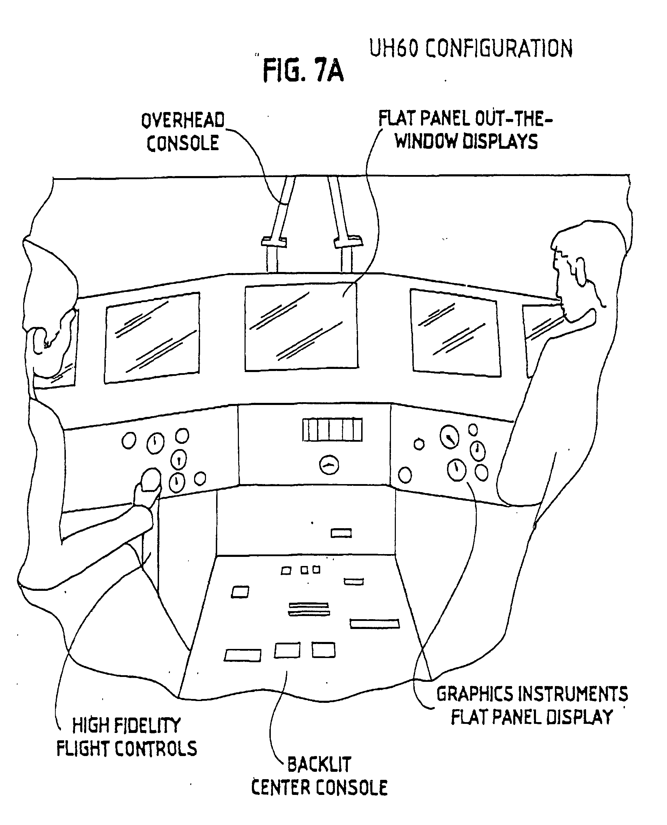

A UH-60 utility helicopter configuration 80, see FIGURES 7 and 7A, is an alternate simulatable vehicle. This system includes two modular sleds 82a, 82b, placed in a side by side configuration, as illustrated in FIGURE 7. The sleds 82a, 82b, are identical to the sleds 30-1 and 30-2 of FIGURE 3. They are particularized for the UH-60 platform by two UH-60 vehicle kits and a common control console 82c.

A copilot observer kit is mounted on the left sled 82a, while a pilot station kit is mounted on the right sled 82b. The center instrument console 82c is mounted between the two stations. An outer shell or bezel covers the entire cockpit to provide a representation of the actual enclosure.

The two sled configuration requires one five channel image generator to drive five OTW displays 84a. Real-time instruments are provided using a three channel instrumentation system 84b. A communication and navigation system are implemented. In this configuration, either the copilot observer of pilot may assume control in real-time.

The pilot and copilot observer stations in FIGURES 3 and 7 have common characteristics that grow out of a modular approach. Both stations are complete with front and side consoles, including all switches, indicators, and instruments required for training. Each crewstation contains collective, cyclic, and pedal controls to provide either station the ability to fly.

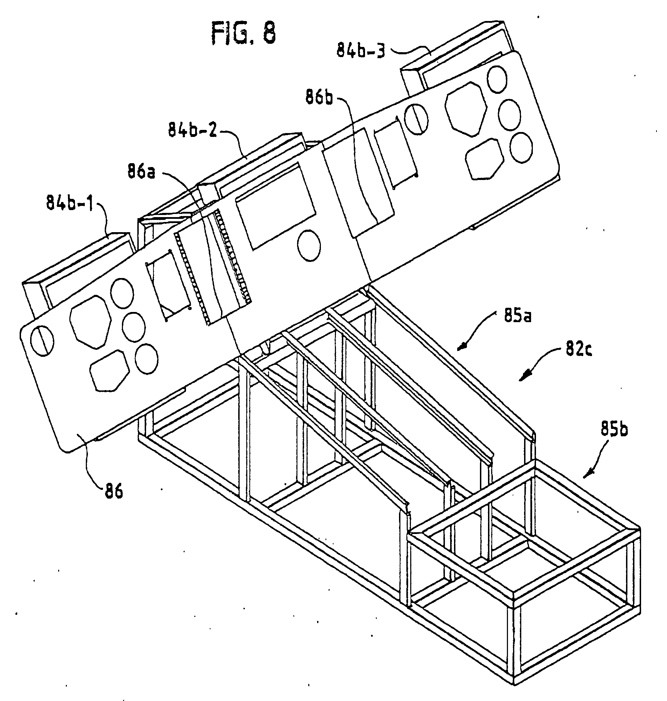

FIGURE 8 illustrates further details of the common central console 82c. As illustrated in FIGURE 8, the console 82c is supported on a multi-element frame. While not shown, the upper surfaces of the console, indicated generally at 86a and 85b, can be filled with modular, manually operable control elements and gages, displays, or meters of a type which would normally be found in the UH-60 platform.

The three channel instrumentation system 84b, having display elements 84b-1, 84b-2, and 84b-3, illustrated in FIGURE 8 is covered in part by a template 86 which corresponds to the shape, arrangement, and appearance of instruments, gages, dials, and read-out devices normally found in the cockpit of the platform. As described previously with respect to the configuration of FIGURE 3, as illustrated in FIGURE 5, the use of templates, such as template 86, results in realistic looking read-outs and gauges of a type that would be found in the subject platform. Further, the template 86 includes openings 86a, 86b which could be filled with modular switch/control elements again replicating those found in the subject platform.

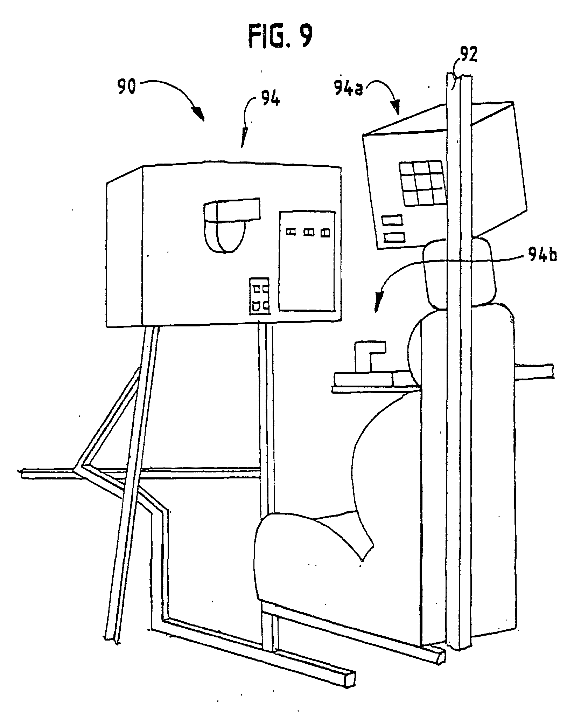

FIGURE 9 illustrates a gunnery configuration 90 based on a modular sled such as the unit 32. The system 90 includes a supporting sled 92 which, in turn, supports gunnery display and associated controls 94. An additional display 94a is disposed somewhat to the right of the operator's position, as would be the case with the platform being simulated. Finally, gunnery related control elements 94b are also carried by the sled 92.

In accordance with the above-described modular approach, the system 90 incorporates a single kit for purposes of personalizing the sled 92. It will be understood that a plurality of sleds, such as the sleds 92 could be linked together to provide three crewstations for a land vehicle such as a tank. In addition to providing the appropriate displays and vehicle interactions, in such an arrangement the crew members would be in communication with one another as would be the case in the subject platform.

With reference to FIGURE 1A, a configuration file for a particular platform to be simulated includes a plurality of object oriented segments, such as segments 18, which are independently executable. Those segments which implement elements of a platform class may be interchangeable. For example, the vehicle dynamic segment or the weapon segment for one type of platform can be replaced by corresponding segments from another platform. Similarly, the manager and environmental segments might also be interchangeable between platforms.

The individual segments distribute messages throughout the virtual network 16a which is implemented by CSL 16. As noted above, the CSL 16 provides various types of services to application segments such as application generic service calls. The services calls access the operating system, the interprocessor communication system, shared resources and also provide tasks scheduling.

The process of creating an executable control program for carrying out a simulation of a selected platform first requires that a configuration file be created. Either a new file can be created or an existing file can be edited or modified using the configuration file editor via the associated graphical user's interface, main window of which is illustrated in Figure 1C.

The configuration file specifies the segments and interconnecting messages which ultimately carry out the control process leading to behavior which simulates the selected platform. A configuration file includes a manager segment. The manager segment issues a loud configuration call. The configuration file is then read in the segment executable so called. The called segments in turn issue enter configuration calls to register with the CSL 16. They then initiate various generic procedure calls to access message data. When the segments are all initialized, the simulation process can begin.

The tasks of the various segments are synchronized on either clock pulses and/or message events.

Each of the messages is in effect a multiple bit bus for registered segments associated with that message. Segments which write or publish to the bus or segments which read or subscribe to the bus are registered segments.

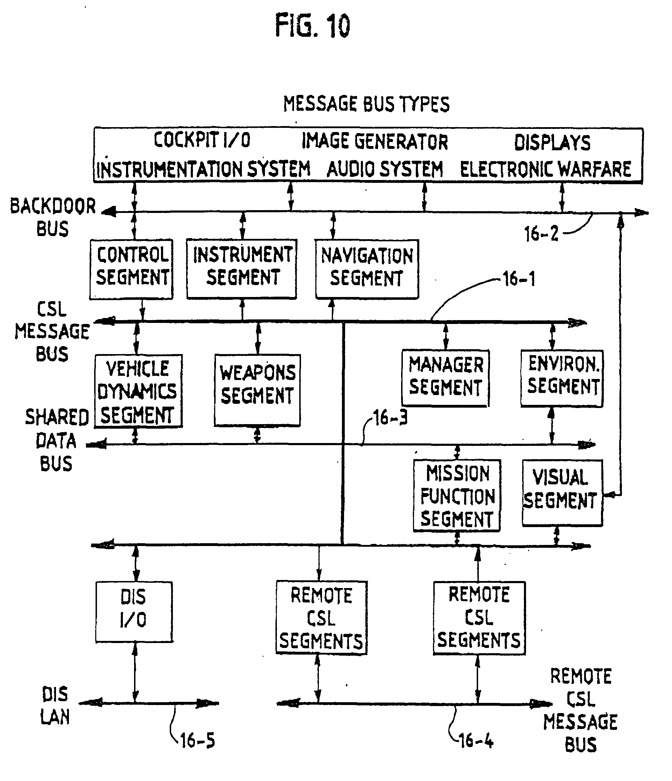

The system 10 supports several different types of message buses as illustrated in Fig. 10. A CSL message bus 16-1 provides intersegment communication within a host processor 12. A group of buses which are associated with input output devices on the sled 30 indicated generally at 16-2, which can be implemented as either RS232 serial ports, Ethernet ports or other types of input output communications paths are used for coupling hardware on the sled 30 to the respective hardware related segments. An internal shared data bus 16-3 is implemented as an unprotected and unbuffered memory.

Communication to other processors on the virtual network 16a can be implemented using remote message buses 16-4. To the extent that the system is coupled to a DIS simulation network, that network can be accessed via an external bus 16-5.

Segment types include object module segments which are application level segments which provide or hold data pertaining to functional characteristics of a selected vehicle. These include vehicle dynamic segments, vehicle propulsion segments, weapons segments, an environmental segment and a manager segment. Support class segments are those which provide data to the object module segments and include the mission function segment and the visual segment.

The lower level hardware interface segments are characterized by having back door buses which provide access to hardware on the sled 30 which might be through the image generator 20, the instrumentation display computer 22 or the electronics interface 24. Finally, the network interface segments facilitate communications between remote processors such as 12-1, 12-2..12-n or a DIS network.

Messages, which are areas of data which are written to and read by segments have a number of parameters. Each message has a name associated therewith. The message name is used in CSL calls to. distinguish between different messages.

The size of each message is specified as a number of bytes required for a buffer to hold single message. A buffer factor parameter defines how many instances of a particular message can be stored or saved at one time. A protect flag parameter controls message access. Read/write access to a message can be enabled or disabled using this parameter. An X position parameter and a Y position parameter are used by the configuration editor graphical user interface to specify the X and Y positions of a given message on the screen.

Segments have associated therewith a plurality of parameters. Each segment is named. The segment name is used by CSL calls to distinguish between different segments used in a given simulation. A host parameter specifies which processor or processors the segment should run on. In the case of a manager segment, in normal operation that segment would be executed on all hosts used in a given simulation process.

A particular processor can be specified to which a given segment will be associated. Absent binding a segment to a processor, CSL 16 and the operating system may move a particular segment to a different host for execution. A path parameter specifies a UNIX path for the segment executable or script file that will run the segment executable. A priority parameter controls the priority that the segment will receive relative to other processors or segments being run on the host. A lock parameter makes it possible to lock a segment's text and data area thereby making it immune to routine swapping by the operating system. A list of message names must be provided along with the type of access to indicate those messages that the segment needs access to. Finally, X and Y position parameters for the configuration editor graphical user interface must also be specified.

The defined segments and messages make up a configuration file specifying characteristics of a simulation for a selected platform. A configuration file can be implemented as a text file. As described subsequently, and as illustrated in Fig. 1C, a configuration file can be edited using a configuration file editor having a graphical user's interface. An exemplary configuration file is attached hereto as Attachment A.

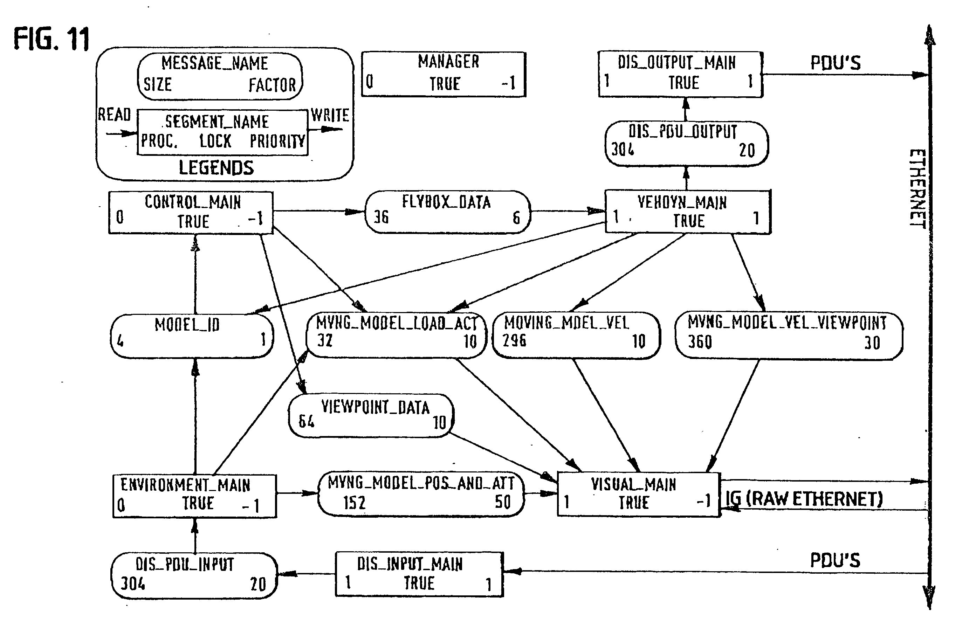

Configuration files specify in effect what is a two dimensional graphical representation or functional flow diagram of the simulation process. Fig. 11 illustrates, graphically in a two dimensional formation, the configuration file attached hereto as Attachment A. In Fig. 11, segments are illustrated as rectangles. Messages, which provide communications between segments are indicated within somewhat oval shaped symbol. The graphical representation of the configuration file of Attachment A is illustrated in Fig. 11, lends itself directly to graphically based editing using a configuration editor module.

Editing can take place via the instructor's counsel. The editing process makes it possible to change the characteristics or the behavior of the platform being simulated between simulation runs simply by carrying out an interactive editing process. In this process, for example, vehicle or platform dynamics can be modified, weaponry can be altered or propulsion systems can be changed.

One of the advantages of using the graphical editing process provided by the system 10 is for prototyping. A new heretofore unbuilt platform can be specified in a configuration file. An appropriate kit or kits can be created and mounted on one or more of the sleds 30 for the purpose of simulating the operation and behavior of the new platform.

Characteristics of the platform can be modified using the configuration file and its graphical user's interface in between simulation runs to vary parameters of the proposed platform. For example, the platforms control characteristics, is propulsion system, or its dynamics can be modified in an attempt to achieve an optimal combination of characteristics prior to ever attempting to build the respective vehicle.

FIGURE 1C illustrates a main window display of a particular configuration file as presented to an instructor or a user by the configuration file editor. Segments again are indicated in rectangular boxes. Across the top of the display is a configuration file type selection window 102. A user can select a particular type of configuration file by clicking on the selected type of platform. Additionally, six menus are specified at a region 104.

Selecting the file menu presents the following options: "open" opens a file system browser so as to select and open an existing configuration file; "new" displays a prompt for a new file name and opens a new configuration file with that new; "save" saves the current configuration file under the name assigned to it; "save as" will provide a prompt for a new file name and save the current configuration file under that name; "close" closes the currently open file and prompt the user to save if any changes were made in the file; "quit" ends the configuration file editor.

The main window also displays the current segments and messages in the selected configuration file, along with their connectivity, in a region generally indicated at 106.

For example purposes, the configuration file illustrated in Fig. 1C is that of a vehicle corresponding to a tank. As will be described subsequently, using the configuration editor, the characteristics of the vehicle illustrated in Fig. 1C can be modified or revised. The revised segments can then be recompiled. Subsequently the compiled segments corresponding to the revised vehicle can then be executed, in combination with a sled, such as a sled 30, which has been modified with a tank kit to correspond to one of the crew positions of the selected tank.

A user can modify the interconnected graphically displayed configuration file. Either segments or messages can be modified or edited.

Modification or editing is carried out by clicking on a segment label or message with a selected one of the buttons on a mouse for example, such as the right button. Other selected keys could be used if preferred. Both properties and parameters of messages can be viewed on the screen or edited. The property characteristics, parameter characteristics, or processor attributes of segments can also be modified or viewed. In this regard, Figure 1D illustrates the dynamics segment for a tank, illustrated in Fig. 1C, opened for modification. As illustrated in Fig. 1D, the segment is presented in block diagram form in a way that a designer or an instructor would be able to carry out graphical revisions to or modifications of the segment. Each of the blocks illustrated in Fig. 1D could be called up individually and modified as required so as to adjust the dynamics of the tank.

In yet another form of editing, a dynamics segment for a different model tank could be imported into the configuration file illustrated in Fig. 1C from another, prestored, tank configuration file in the system. This makes it possible to quickly move model object segments from one platform to another model of the same general type of platform for comparison and study purposes.

When the user or operator is finished modifying the segment parameters of Fig. 1D, the segment can be saved. Any other segment can be revised or modified accordingly. Hence, the simulation algorithm or methodology can be revised in between runs to take into account new vehicle characteristics to be explored or new or different functionality to be added to a known vehicle.

If the edit menu is selected from the main window, Fig. 1C, a variety of editing functions can be carried out. A connect option makes it possible to make a connection between a selected message and a selected read or write port or box of a segment. A delete function will delete all selected objects segments messages or connection lines. An add segment capability presents a window to enter the properties of a new segment and then display the segment box on the main window. Once displayed the new segment can be positioned appropriately. Subsequently, messages can be added by an add message feature. The user will be presented with a window for entering the properties of a new message. The message logo will be displayed on the window and can be moved to an appropriate position linking segments. Other editing capabilities as would be known and understood to those of skill in the art can be provided.

The view member makes it possible to access model information, change the size of the main window to adjust the amount of marginal white space and provide a monitor window which will provide an estimate usage summary.

The options menu provides an ability to select a processor upon which a given segment is to run. The print menu provides an ability to print various items including segments, messages, con activity information as well as host information.

The control menu can be used to run or shut down a simulation.

Configuration files for new or modified vehicles can be created from existing segments and configuration files.

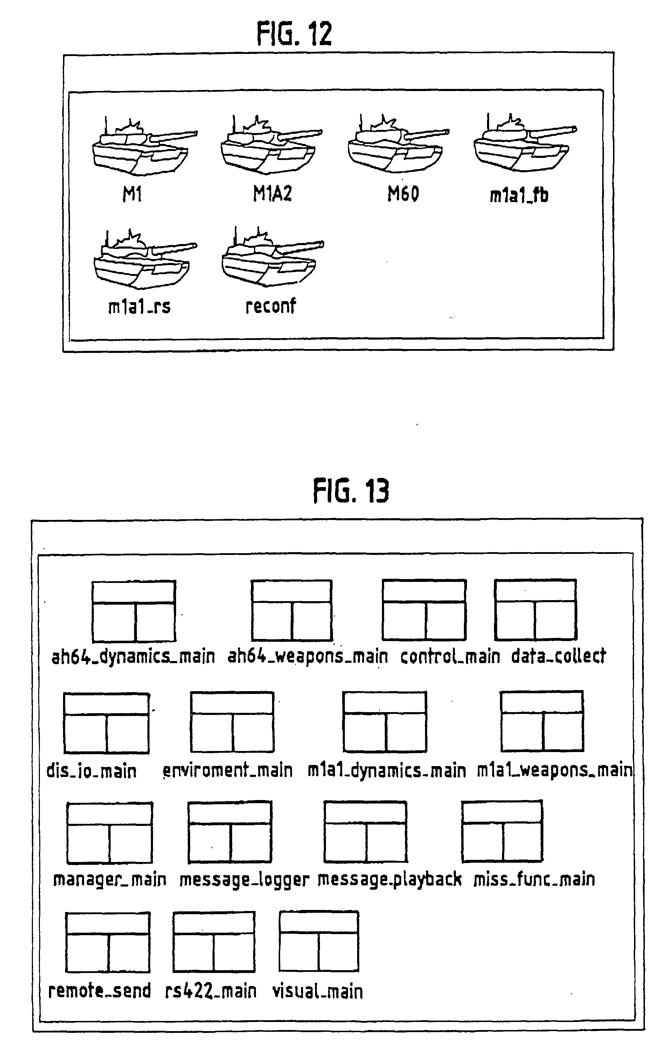

For example, if the open feature is selected from the file member, a tool bar 102 will be displayed illustrating a configuration file types present in the system. Each of the illustrated symbols represent working configuration files that are stored for recall. If for example from the tool bar 102 the tank icon is selected, a supplemental window will appear, see Fig. 12, which presents icons representing those configuration files for vehicles that correspond to the selected type of vehicle. The configuration file for this vehicle will then be loaded into the main window 106 as in Fig. 1C.

Additional prestored segments can be added to the configuration file being displayed by selecting the "segment" icon which in turn will display a window as in Fig. 13. Segments from the window in Fig. 13 can then be dragged into the main window, Fig. 1C and message connections can be made thereto as appropriate. In addition, the newly added segment can be revised or edited as described above. Subsequently, the configuration file can be processed and compiled into executable form and the simulation executed.

It will be understood that the various replaceable modules, such as the modules 46a and 46b could be implemented as hard wired interconnections of various electromechanical and/or electronic elements. Alternately, it will be understood, that one or more of those modules could include a programmed processor coupled to associated control elements such as switches or dials as well as instrument readouts, or simulated readouts, for the purpose of implementing the desired function of that particular module. The local processor in the module can be driven by locally prestored instructions or data. Alternately, the host 12 could transfer some or all of the instructions and data via the electronic interface 24 to the respective local processor for execution. Similarly, that processor can transfer data back to the host 12 for analysis and to respond to actions of the various crewmembers.

Attachment B provides additional information concerning the structure and use of segment and message elements as described previously.

From the foregoing, it will be observed that numerous modifications and variations can be effected and that it is to be understood that no limitation with respect to the specific embodiment illustrated herein is intended or should be inferred, the scope of the invention is defined by the appended claims.

# ATTACHMENT A

```
# -------------------------------------------------------------------------------
#                               Configuration File
#
# The rest of a line after a '#' is ignored.
# Keywords are not case sensitive.
#
# NOTE: A Message must be defined before being referenced within a Segment.
#
# Message format is:
#    Message_Name       name        (Unique record name, max. 80 characters)
#       Size            1244        (Record Size - must be multiple of 4)
#       Factor          8           (Message Factor, 0 = unprotected
#       Protect         True        (Message access protection, True or False)
#       GUI_XPos        100         (X Position for GUI)
#       GUI_YPos        250         (Y Position for GUI)
#    Message_End                    (End of message record)
#
# Segment format is:
#    Segment_Name       name        (Unique record name, max. 80 characters)
#       Message_Name    name mode   (Unique record name, max. 80 characters,
#                                    mode = READ, WRITE or READ_WRITE)
#       Host  hostname protocol port (Host t. run segment on)
#                                    (TCP/UDP protocols supported)
#                                    (port must be unique number)
#       Processor       0           (Specify processor to run on:
#                                    -1 (don't care) or 0..max available)
#       Path            pathname    (Path where executable is located, max. 80)
#       Priority        10          (Priority to run at, system dependent)
#       Lock            TRUE        (Lock into memory or not, TRUE or FALSE)
#       GUI_XPos        100         (X Position for GUI)
#       GUI_YPos        250         (Y Position for GUI)
#    Segment_End                    (End of segment record)
#
# -------------------------------------------------------------------------------


# Define Messages
Message_Name    DIS_PDU_Input
    Size        304
    Factor      20
Message_End

Message_Name    DIS_PDU_Output
    Size        304
    Factor      20
Message_End

Message_Name    Flybox_Data
    Size        36
    Factor      6
Message_End

Message_Name    Model_ID
    Size        4
    Factor      1
Message_End
```

```
        Factor          10
Message_End

Message_Name    Moving_Model_Pos_And_Att
    Size        152
    Factor      50
Message_End

Message_Name    Moving_Model_Vel
    Size        296
    Factor      10
Message_End

Message_Name    Moving_Model_Vel_Viewpoint
    Size        360
    Factor      30
Message_End

Message_Name    Viewpoint_Data
    Size        64
    Factor      10
Message_End

# Define Segments (Messages must already be defined!)
Segment_Name    Manager
    Host        localhost
    Processor   0
    Path        manager
    Priority    -1
    Lock        TRUE
Segment_End

Segment_Name    control_main
    Message     Flybox_Data             WRITE
    Message     Model_ID                READ
    Message     Moving_Model_Load_Act   WRITE
    Message     Viewpoint_Data          WRITE
    Host        localhost
    Processor   0
    Path        control_main.sh
    Priority    -1
    Lock        TRUE
Segment_End

Segment_Name    dis_input_main
    Message     DIS_PDU_Input   WRITE
    Host        localhost
    Processor   1
    Path        dis_input_main.sh
    Priority    1
    Lock        TRUE
Segment_End

Segment_Name    dis_output_main
    Message     DIS_PDU_Output    READ
    Host        localhost
    Path        dis_input_main.sh
```

EP 0 872 819 B1

```
     Lock          TRUE
  Segment_End

  Segment_Name   environment_main
     Message      DIS_PDU_Input           READ
     Message      Model_ID                WRITE
     Message      Moving_Model_Load_Act   WRITE
     Message      Moving_Model_Pos_And_Att WRITE
     Host         localhost
     Processor    0
     Path         environment_main.sh
     Priority     -1
     Lock         TRUE
  Segment_End

  Segment_Name   vehdyn_main
     Message      DIS_PDU_Output          WRITE
     Message      Flybox_Data             READ
     Message      Model_ID                WRITE
     Message      Moving_Model_Load_Act   WRITE
     Message      Moving_Model_Vel        WRITE
     Message      Moving_Model_Vel_Viewpoint WRITE
     Host         localhost
     Processor    1
     Path         vehdyn_main.sh
     Priority     1
     Lock         TRUE
  Segment_End

  Segment_Name   visual_main
     Message      Moving_Model_Load_Act       READ
     Message      Moving_Model_Pos_And_Att    READ
     Message      Moving_Model_Vel            READ
     Message      Moving_Model_Vel_Viewpoint  READ
     Message      Viewpoint_Data              READ
     Host         localhost
     Processor    2
     Path         visual_main.sh
     Priority     -1
     Lock         TRUE
  Segment_End
```

Configuration File

ATTACHMENT B

**Application Layer Segments**

The Reconfigurable Simulator software consists of several independently executing but integrated segments. Segments may be configured to run on separate processors on a particular machine or on separate machines entirely in order to maximize available computational capabilities. The segments interact through predefined messages which are shared memory locations that are controlled by the CSL.
The following segments exist in the current RHS:

**Control Segment**

The Control Segment is responsible for getting user input from hardware devices (as well as software-simu-

14

lated devices) and making it available to the rest of the simulation in the form of a message and outputting data to the hardware. When the control segment is reading a flybox, the process becomes I/O bound. Trying to time the execution is less straightforward than other segments. Actual CPU usage is computed for statistics reporting.

This segment should also be the real-time user interface into the simulation. Viewpoints, entity attachments, and ownship beaming modifications should be accomplished through a graphical user interface.

While the control segment is general in nature in that it is responsible for I/O, various type of hardware can be used in the simulation. Currently, a flybox or the EID PC are used for vehicle I/O. The EID PC is a rack mounted PC that sits in the sled of the reconfigurable system. It interfaces to an ADAC unit to process I/O and sends the data the RHS via ethemet. There are currently five individual control segments for the RHS. These segments are for the AH64 flybox, UH60 flybox, AH64 EID, UH60 EID, and M1A1 flybox. Depending upon which configuration the system is ruining, the appropriate control segment is selected.

Messages read:  Processing Time, Vehicle Output, Visual Result
Messages written: Instrumentation Data, Navigation Data, Ownship Action, Time Stats, Vehicle Data, Visual Action

**DIS PDU Input/Output Segment**

The DIS PDU I/O segment is responsible for receiving and transmitting Protocol Data Units (PDUs) across the simulation network. It converts DIS PDUs to UDP ethemet packages and sends them to the DIS network. It also monitors the network for DIS PDU traffic and writes messages to the other segments when a valid PDU is encountered.

Messages read:  DIS PDU Output, Processing Time, Unformatted Output PDU
Messages written: DIS PDU Input, Time Stats, Unformatted Input PDU

**Environment Segment**

The Environment Segment is responsible for all remote PDU processing. Its primary responsibility, however, is processing remote entities via Entity state PDUs. If an entity is new, the Environment Segment will request that the model be loaded by the Visuals Segment, and that terrain following results be returned by the Mission Functions Segment. Otherwise, the existing model is updated. Models which are not updated from entity state PDUs are dead reckoned using previously specified attitudes, positions, and velocities. Since the number of entities to handle can become overwhelming, range and field of view are used to prioritize the entities. As many entities that can be processed within the time allotted are then moved based upon their prority. Low priority vehicles can still be processed using a time out counter.

Messages read:  DIS PDU Input, Moving Model Mission Function Result, Processing Time, Shared Data, System Info, Unformatted PDU Input, Visual Result
Messages written: DIS PDU Output, Instrumentation Data, Mission Function Request, Ownship Action, Shared Data, Time Stats, Unformatted PDU Output, Visual Action

**Instrumentation Segment**

The Instrumentation Segment processes all the data to be sent to the instrumentation PC. It reads data from various segments, performs any necessary byte swapping (refer to Section 6 Instrumentation Operation), and then assembles raw ethernet data packets to be sent to the Instrumentation PC.

Messages read:  Instrumentation Data, Processing Time
Messages written: Time Stats

**Manager Segment**

The Manager Segment begins the simulation by informing the core services of the current system configuration and then starting the segments. The manager segment can take the optional command line arguments -spawn/-nospawn and -clock <clock cycle>. The -spawn option, which is the default if no -spawn/-nospawn is given, is used to tell the CSL to automatically spawn (or start) the segments. If the -nospawn argument is given then all the segments in the simulation must be manually started by the user. The -clock argument can be used to generate timing if the Visuals Segment is not being used (this is primarily for debugging purposes). In addition, the Manager Segment is also responsible for gathering timing information from all other segments and calculating CPU loads and informing the segments of their allowable run time. For more information on this time management see the section on Load Management.

Messages read:     Time Stats
Messages written:  Processing Time

## Mission Functions Segment

The Missions Functions Segment is responsible for computing mission functions. These include terrain following for both ownship and remote vehicles, ownship collision, line-of-sight, and projectiles. This segment may use the image generator (IG) to perform some mission functions by interfacing with the Visuals Segment. The decision to use the IG is based on the load constraints placed on the segment, improved accuracy that the IG might provide, and time constraints.

The Mission Function Segment performs the following functions: (1) read visual messages, (2) read mission function request messages, (3) read IG results, and (4) process current mission function definitions. The Mission Function Segment will keep track of models and their positions by reading the Visual Action messages sent to the Visuals Segment. All other messages to the Visual Segment will be ignored.

Mission function requests can be definitions, updates, or terminations. Definitions request that the Mission Functions Segment return results at a frequency specified in the definition. Definitions require that the model be loaded that the mission function is associated with. The mission function may be handled by the segment or by the IG. Updates allow some data associated with the mission function to be changed (e.g. a projectile position). Terminations cancel a mission function.

Results read from the IG are basically returned to the requesting segment without much interaction by the Mission Functions Segment. The segment does determine which result message buffer to put the result in (either ownship or remote moving model).

Processing mission functions can be computationally expensive. To alleviate this potential problem, subcycling is performed. Definitions require a frequency to be given for each mission function. Defining mission functions with a frequency less than every field can help avoid overloading the segment. In any event, the segment will only perform as many mission functions as it predicts it can, and might run the mission functions at a much lower frequency than requested. Handling some mission functions on the IG can reduce the load. This adds a latency in the results. Ownship mission functions are always given priority over remote moving model mission functions.

Messages read:     Mission Function Request, Processing Time, System Info, Visual Result
Message written:   Moving Model Mission Function Result, Ownship Mission Function Result, System Info, Time Stats, Visual Action

## Navigation Segment

The Navigation Segment is responsible for updating instruments corresponding to the navigation of a helicopter. This includes such instruments as the Doppler navigational unit. It reads inputs from the hardware and state information about the ownship helicopter and performs the logic in order to update navigational equipment.

Messages read:     Navigation Data, Processing Time, Shared Data, System Info
Messages written:  Instrumentation Data, Time Stats, Vehicle Output

## Vehicle Dynamics Segment

The Vehicle Dynamics Segment performs all the processing for the ownship model. During initialization, the segment requests that the ownship model is loaded and that terrain following and collision mission function results be returned. It also communicates to the weapons segment the state of the vehicle so that proper ballistic solutions can be computed. During normal execution, the segment computes the vehicle's current state vector by accepting input from the Control Segment and integrating the math model with the appropriate time step. Dead reckoning and heartbeat functions for the ownship, requirements of the DIS protocol, are handled by this segment and PDU messages are sent to the DIS I/O Segment if necessary.

The basic requirement for the math model is that the vehicle should have discernible parts which accurately simulate the operation of the vehicle in question. For ground vehicles this includes the engine, transmission, ground interface, suspension, auto pilot, barrel control when necessary, and equations of motion to compute the output state vector used by the segment. Rotary wing flight vehicles will require the engine, auto pilot, main rotor and tail rotor models, aerodynamic performance characteristics, suspension, ground interface including ground effects, and equations of motion to compute the output state vector used by the segment. The math model should be designed and generated by some form of graphical modeling tool so that updating and testing the vehicle dynamics can be done in a user friendly and thoroughly commented environment. The code that will be generated by this tool should be easily interfaced into the vehicle dynamics segment with minimal effort from the user. The graphical modeling tool should be accessible through the Core GUI so that the user will not have to enter a command line environment.

The autopilot should be able to accept a table of waypoints that include the point in space, a desired approach velocity, and a pause time when the vehicle has reached the waypoint. It should also be able to be reset and turned off and on at will. Other operations such as enfilade and defilade maneuvers should be able to be performed at any time during a waypoint table traversal. These autopilot characteristics should be valid for all types of vehicles. The waypoint table must be provided in an ASCII text file with the following format using floating point numbers:

```
<X_POS_1> <Y_POS_1> <Z_POS_1> <APPROACH_VEL_1> <PAUSE_TIME_1>
   ...         ...         ...           ...               ...
<X_POS_N> <Y_POS_N> <Z_POS_N> <APPROACH_VEL_N> <PAUSE_TIME_N>
   0.0         0.0         0.0           0.0               0.0
```

The last line tells the segment that there are no more waypoints to be read. There is a limit of 50 waypoints that can be input through a waypoint table.

Like the Control Segment, there are individual vehicle dynamics segments depending upon the configuration being run. The currant vehicle dynamics available are for the AH64, UH60, and M1A2. Although the dynamics for the vehicle may be different, the messages read and written should be the same. This allows for quick reconfigurability by simply replacing one dynamics segment with another.

Messages read: Ownship Action, Ownship Mission Function Result, Processing Time, System Info, Vehicle Data
Messages written: DIS PDU Output, Instrumentation Data, Mission Function Request, Shared Data, Time Stats, VHD Data, Visual Action

**Visuals Segment**

The Visuals Segment processes all requests needed of an IG. These requests include model loads and unloads, model position and attitude updates, viewpoint updates, special effects activation and deactivation, and missions function requests. It is also responsible for receiving the IG interrupt for timing and informing the core services so that the other synchronous segments can run.

Again, the visual messages should be generic in nature so that a Visual Segment for one type of IG can be easily replaced with a Visual Segment for another IG. Currently, there are two visual segments available - one for the SE and one for the PRO.

Message read: Processing Time, Shared Data, System Info, Visual Action
Message written: Shared Data, Time Stats, Visual Result

**Weapons Segment**

The Weapons Segment is responsible for computing the projectile ballistics and ballistic solution for the vehicle being simulated. The basic functionality of the segment is to read the proper inputs from the user and vehicle, compute a ballistic solution, fire a projectile or guided munitions, maintain a list of airborne projectiles, and detonate the projectiles on impact with the database or another moving model. It is also responsible for generating the firing and detonation PDU messages to be sent to the DIS I/O Segment. The two vehicles with weapons that are currently being simulated, the M1A2 MBT and the AH-64A Helicopter, employ a Fire Control Electronics Unit(FCEU). This segment is effectively acting as the FCEU in order to assure proper behavior of the weapons system being simulated. This requires that the segment be effectively linked to the vehicle dynamics, environment, and mission functions segments.

Like the vehicle dynamics segment, the math model that is used to simulate the above requirements should be designed and generated by a graphical modeling tool so that updating and testing the weapon system dynamics can be accomplished in a user friendly and thoroughly commented environment. Upon completion of the segment wrapper, the code generated by the modeling tool should be able to be easily interfaced into the weapons segment with minimal effort from the user.

There are currently two vehicle specific weapons segments for the M1A2 and the AH64-A but the messages read and written should be the same in order to allow for quick reconfigurability of the software.

Messages read:    Ownship Mission Function Result, Processing Time, Shared Data, System Info, VHD Data
Message written:    DIS PDU Output, Instrumentation Data, Mission Function Request, Shared Data, Time Stats, Visual Action

**Application Layer Messages**

The following messages are defined in the current RHS:

**DIS PDU Input Message**

This message contains PDUs to be processed by various segments.

**DIS PDU Output Message**

This message contains PDUs to be output to the network.

**Instrumentation Message**

This message contains data to be processed and sent to the instrumentation PC.

**Mission Function Request Message**

This message contains requests to the mission functions segment. Mission functions can be defined to be one-shot (i.e. executed once) or continuous.

**Moving Model Mission Function Result Message**

This message contains remote model mission function results (typically terrain following).

**Navigation Data Message**

This message contains inputs from the hardware corresponding to navigational equipment.

**Ownship Action Message**

This message contains actions for the ownship to take, primarily when it is in Simulation Management (SIMMAN) mode. This includes such actions as create/remove, reconstitution, stop/start, and data query.

**Ownship Mission Function Result Message**

This message contains ownship mission function results (terrain following, collision, line-of-sight, and projectile).

**Processing Time Message**

This message contains a processing time limit that each segment on a processor will apply to its load. A duration is also specified until the next load management analysis takes place.

**Shared Data Message**

The message contains data about all the entities in the current simulation, both ownship and remote. This data includes such information as position, orientation, and velocity. It is a ping-pong array of data that is read from the ping side and written to the pong side during even frames and vice versa during odd frames. It is an unprotected message which allows all segments that need access to entity information to make one request at the beginning of the simulation for the data. This allows quicker access to the data and hence, minimizes the overrun of execution time since the number of entities can be large.

**System Info Message**

This message contains load management information. The mission function segment and the environment segment use this information in order to control the work load. The message can contain (1) viewpoint position and attitude, (2) viewpoint field of view, (3) filtering range, or (4) maximum wait count.

**Time Stats Message**

This message contains timing statistics for each segment. The information is used by the Manager Segment to perform load management.

**Unformatted Input PDU Message**

This message is similar to the Input PDU Message in that it contains data related to input PDUs. However, instead of being formatted like a PDU it simply contains unformatted data that holds the necessary information related to a particular type of PDU. Therefore, if the format of a PDU changes but the data in it remains the same then this message does not have to be changed. In the future this message should completely replace the DIS Input Message.

**Unformatted Output PDU Message**

This message is similar to the Output PDU Message in that it contains data related to output PDUs. However, instead of being formatted like a PDU it simply contains unformatted data that holds the necessary information related to a particular type of PDU. Therefore, if the format of a PDU changes but the data in it remains the same then this message does not have to be changed. In the future this message should completely replace the DIS Output Message.

**Vehicle Data Message**

This messages contains the digital and analog data read from the hardware.

**Vehicle Output Message**

The message contains digital and analog data to be output to the hardware.

**VHD Data Message**

This message is responsible for communicating information about the ownship's current state to the weapons segment. Included in this message is the vehicle's position and orientation of the hull and articulated parts, the database being used, PDU update information, gunner's sight orientation, and a flag which indicates whether or not the barrel has incorporated the ballistic solution's offset commands indicating that it is ready to fire. It is updated every field by the vehicle dynamics segment and is read by the weapons segment whenever a projectile fire request has been processed or when the user requests that a ballistic solution be computed.

**Visual Action Message**

This message is an "all-purpose" message read by the visuals segment to perform a variety of visual functions. These functions include model loads, unloads, and updates, viewpoint updates, special effects activation and deactivation, and mission functions.

**Visual Mission Function Result Message**

This message retums mission function results computed by the IG (Visuals Segment) to the Mission Functions Segment for proper bookkeeping.

**Simulation Issues**

Any simulation has to forfeit some aspects of realism. DIS has several simulations issues beyond those typically found in image generation.

Segments in this system are categorized as asynchronous or synchronous, and fixed-load or variable-load.

**Synchronization**

In the DIS environment, components of the simulation are intended to be asynchronous. However, in order to insure correctness, some synchronization may be necessary. Several segments execute when some input is available: DIS I/O Segment and Control Segment. Other segments need to be executed every field: Vehicle Dynamics Segment, Environment Segment, Instrumentation Segment, Mission Functions Segment, Navigation Segment, and Visual Segment.

**Load Management**

It is the goal of DIS to have large simulations. It is very likely that the simulation load will be too great for cost-effective platforms. So, load management is being designed into the RHS at the beginning. The Manager Segment will be responsible for gathering statistics on all maintainable segments and providing feedback to the segments so that each segment can manage its load.

**Statistics Collection by Individual Segments**

Each segment will be categorized as having a fixed-load or variable-load execution. A fixed-load segment cannot do much about controlling its execution time. The Control Segment may fall in this category. A segment of this type has one unit load and an associated execution time.

A variable-load segment has multiple units of work to process. In many instances it may be possible to prioritize the units so that important units are processed first when all units cannot be processed in one field. The Environment Segment and Mission Function Segment fall into this category. Models which are far away or are not visible may not need to be positioned or require terrain following results. Such tasks can be postponed to a more opportune time.

Each segment will also be classified as being either asynchronous or synchronous. A synchronous segment will run every field. An asynchronous segment has no definable schedule. So, only synchronous segments are guaranteed to report statistics to the Manager Segment when they are supposed to.

Each segment will be responsible for collecting its own statistics. At some appointed time, it will send a message to the Manager Segment detailing its load type (fixed vs. variable), synchronization type (asynchronous vs. synchronous), number of units of work, and execution time per unit of load. A segment with different types of work may have to normalize its different measurements.

The Manager Segment will send a message specifying how much load the segment can operate on and still safely finish within the field. It is advantageous that the message also detail when statistics should be sent again. If a segment's load varies during this interval, it must not go beyond the limit established from the last analysis. Falling below the reported load will result in idle time within the field and will prevent another segment from doing more work.

**Statistics Analysis by the Manager Segment**

The Manager Segment will bookkeep each segment's load and execution time. The Manager Segment will gather statistics messages until all synchronous segments have sent them. An asynchronous segment cannot guarantee that it can report its statistics at the appropriate time, but its data are used if reported before the last synchronous segment. If no new data are present for a segment, old data are used. This fact must be reported back to the tardy segment. Since this is likely to be a recurring problem, it is advantageous that an asynchronous segment report its statistics early.

Each processor has independent, segment assignments, so a weight is computed for each processor using the statistics for the segments assigned to that processor. In order for a processor to be able to process all of its segments in a field, the following equation must be true:

$$(1) \qquad \Sigma Tf + \Sigma(Tv * Nv)* Wp <= \text{Field Time,}$$

where

Tf = Time for a fixed-load segment f,
Tv = Time for a variable-load segment v,

Nv = Number of units for a variable-load segment v, and

Wp = Weight for processor p,

for all segments f and v on processor p.

Determining a maximal value for Wp could be time consuming. So an acceptable range is defined that the sum above can be within the range. Then an iterative algorithm can be used to compute an acceptably large value for Wp such that the equation is true.

Once a weight is determined, it is sent in a message to the appropriate segments. The responsibility falls upon the segment to manage its load according to the returned weight. Also, the Manager Segment will tell the other segments how long to gather new load data before it computes a new weight. During this time, the segments are locked in on the old load.

### Measuring Execution Time

Each segment must determine its load and execution time. This can be an average, a maximum, or some other estimate. Using a maximum might result in idle time at the end of a field if a segment does not maintain this load. An average may provide a good measure in the long term, but some other estimate may be necessary if the average load is small for some period. In any case these decisions are made on a per-segment basis and will not affect the design of other segments (but they will affect performance).

The primary goal in load management is to attempt to guarantee high priority functions are handled first (e. g. ownship position/attitude updates, weapons functions).

### Advanced Load Management Strategies

The load management scheme described above assumes that the execution of a segment is equally important with more consideration given heavily loaded segments. It would be more desirable to allow more time for some segments despite their light loads. Also, it would be advantageous to change the allotment as the simulation progresses.

### Nonuniform Weights

Rather than assigning the same weight to all segments on a processor, nonuniform weights can be assigned. This will allow more important segments to get more time during the field to handle their loads. This strategy will require some initial knowledge of which segments are most important. Each segment will need an associated percentage which describes how much of the field should be allocated for it. Equation (1) above then becomes:

$$(2)\ \Sigma Tf + \Sigma(Tv * Nv * (|v| * Pv) * Wv) <= \text{Field Time},$$

where

Wv = Weight for variable-load segment v,

Pv = Percentage of field to allocate to segment v, and

|v| = the number of variable-load segments on processor p.

To derive the uniform weight equation, set Pv = 1 / |v| for all segments v.

### Dynamic Nonuniform Weights

The above strategy can be extended by allowing each segment's percentage to change during the simulation. The equation above will still need to be true.

### Forced Load Analysis

Re-computing the load at fixed intervals can result in slow reaction to sharp load chances. One solution is to make the interval small. An alternative is to allow load analysis to be recomputed on demand.

**Users Manual**

This section describes how to run the RHS from both the command line or from the core services GUI (Core GUI).

**Users Interface**

The source code for the RHS is located in /proj/sim2000/baseline. An executable version of the RHS is located in /proj/sim2000/runbase. The following files should be present in the directory that the simulation will be run out of:

```
inputs/drc_<vehicle type>.out -- daily readiness values
inputs/host.model_map.<database>.in -- host model names and types
inputs/<ig type>.model_map.<database>.in -- IG model names and types
inputs/nav_data.<database>.in -- marker beacon, VOR/ILS positions
inputs/<helo type>_radio_freq.in -- preselected radio frequencies
inputs/dis_params -- DIS parameters
configs/*.param -- used for running modeling tools when using core GUI
easy5x_<vehicle type>.script -- runs Easy5x when using the core GUI
matrixx_<vehicle type>.script -- runs MatrixX when using the core GUI
model_offsets.dat -- PRO model offsets
mars.xbm -- icon used in the control segment GUI
run_core_gui -- file to run the core GUI
scripts/sim2000_setup.script -- environmental variables setup file for the RHS
scripts/visual_env.com -- PRO environmental variables setup file
veh_dyn.dyn - M1A2 vehicle dynamics parameter file
copter_dyn.dyn -- AH64 vehicle dynamics parameter file
rocket_dyn.dyn - Hellfire dynamics parameter file
setups/<hostname>.setup -- site and host number setup file
<configuration>.cfg -- segment configuration file to be run
<segment(s)>_main -- segment executables
<segment(s)>_main.sh -- segment shells
```

Before you are able to execute the host, you need to be logged in as root to ensure that the operating system assigns priority to the host over any other processes. See Floyd West or Bill Garbacz for the root account information.

The following explains how to run the RHS without the Core GUI. For information on running the RHS via the Core GUI (refer to Section 3.2 Host Execution Through the Core GUI).

The sim2000_setup.script in the scripts directory should be 'sourced' before running by typing "source sim_setup.script interactive". This file will set up the appropriate environment variables and will also look for a setups/<hostname>.setup file that sets up host specific environment variables.

The simulation is started by running the manager_main program. The manager_main expects at least one input, which is the system configuration file and can be given any name, usually having a .cfg extension. Also, the manager_main accepts the option to spawn or not to spawn the segments and can be specified by the -nospawn or -spawn switches. The default is to spawn the segments. If segments are spawned, then the core services will look in the configuration file for the path name of the segment. Currently, for each segment there is a shell which runs each segment in its own xterm window. Output is redirected to a file (<segment_name>.out) while also being viewed in the window via the tee(1) command. If segments are not spawned, then the user must run each one separately. The simulation is stopped by <ctrl-C> in the manager_main window and then running the shutdown command. shutdown frees the shared memory allocations and semaphores.

**Host Execution Through the Core GUI**

The following is a step by step example of how to bring up the Core GUI, modify a dynamics segment, and run the RHS. The configuration that will be used is the ah64_eid.hel.cfg which uses the reconfigurable hardware in an AH64-A configuration. For example purposes, we will use the IVACC database of northern Alaska.

```
1) Log into annapolis
2) Bring up the IG and load the Alaska database (see Section 5 Image Generator Operation)
3) Log in as root in the window from which you will be running the RHS.
```

4) Command: source ~/.cshrc

5) Command: cd /proj/sim2000/runbase

6) Command: run_core_gui

7) Using the left mouse button select File Menu->Open from the Core GUI

8) Using the left mouse button select the helicopter icon in the Sim2000 Config Editor window.

9) Using the middle mouse button drag the ah64_eid icon into the workspace

10) Using the left mouse button select View Menu->Fit from the Core GUI

11) Place the cursor over the ah64_dynamics_main segment, press the right mouse button, and select Parameters

12) Modify the vehicle dynamics model as desired and regenerate the segment parameters file as necessary (see Section 4.2 Segment Generation from Easy5x Models)

13) From the Easy5x GUI select File Menu->Quit using the left mouse button

14) Using the left mouse button select Control Menu->Options from the Core GUI. A separate palette will be displayed with default values. The values can be changed by either using the left mouse button or typing in values where appropriate. For this example, use the default values by selecting 'OK' with the left mouse button.

15) Optionally, diagnostics can be run by using the left mouse button to select the Control Menu->Options and then selecting Diagnostics. The left mouse button is then used to select which diagnostics to run. Once the diagnostics have been chosen, use the left mouse button to select 'OK' or'Cancel'.

16) Using the left mouse button select Control Menu->Run from the Core GUI. Wait for the segment windows to print Quorum Released

17) From the IG OIC GUI (see Section 5 Image Generator Operation) use the left mouse button and select Enable Host

18) In the Control Segment GUI use the left mouse button to double click on the ownship entry in the entity list. This attaches the viewpoint to the ownship.

19) In the same GUI select Viewpoint Menu->Helicopter OTW with the right mouse button

20) Once the simulation is over, from the Core GUI select Control Menu->Shutdown.. using the left mouse button

21) From the IG OIC GUI select Disable Host

**Environment Variables**

The following environment variables are currently used by the simulation:

| Environment Variable | Description | Values |
| --- | --- | --- |
| CIO_DEBUG | Turn on debugging for CSL configuration I/O | True/False |
| CSL_REMOTE_SPAWN | Remote spawn segments | True/False |
| DATABASE | Name of the database being used | alaska, bayou, desert, france, hunter, irwin, orlando |
| DBDIR | Database path | Directory containing the surface files of the database |
| DIS_DATA | Data directory for the database files | Generally /proj/dis/data |
| DIS_SYNC | Operating rate of the simulation | Hz_60, Hz_30, Hz_15 |
| DYNAMICS_DEBUG | Turn debugging on/off for ownship dynamics | True/False |
| EID_SYNC | Run synchronously or asynchronously with the EIDI/O PC | True/False |
| FILTER_RANGE | Range for filtering remote entities | Any natural number |
| FORCE_ID | Force ID of remote entities | Friendly, Opposing |
| IG_ETHER_ADDR | Ethernet address of the IG | Currently 00:00:83;1E:00:68 |
| IG_PORT | Port number for IG communications | 6500 or 6501 |
| IG_TYPE | Type of IG we are using | PT, SE, or PRO |
| LOOK_DIR_PATH | Path for the look dir | Generally $DBDIR |
| MANAGER_PERCENTS | Weight given to each segment in the simulation | Natural number between 0-100 for each segment in the simulation |
| MF_MODE | Mission functions mode | Generally 27 |
| MLBNAME | Model library file name | $DBDIR/dis93.mlb |

(continued)

| Environment Variable | Description | Values |
|---|---|---|
| MMOD_DEBUG | Turn debugging on/off inside moving model routines | True/False |
| PARAM_PATH | DIS parameters file name | inputs/dis_params |
| SIMMAN_MODE | Determine whether or not to accept simulation management commands | True/False |
| VEHICLE_CONFIG | Configuration of the vehicle | AH64PLT, AH64CPG, AH64PLT_CPG, M1, UH60PLT, UH60CPG, UH60PLT_CPG |
| VEHICLE_TYPE | Type of vehicle configuration | AH64, M1A2, UH60 |
| VISUAL_I_DEBUG | Turn debugging on/off for visual interface | True/False |
| VISUAL_R_DEBUG | Turn debugging on/off for visual routines | True/False |
| UDP_RECEIVE_PORT | Ethernet receive port for DIS PDUs | Any natural number Generally 3002 |
| UDP_SEND_PORT | Ethernet send port for DIS PDUs | Any natural number Generally 3003 |
| UF_MLBNAME | UF model library file name | Generally same as MLBNAME |
| WAYPOINT_TABLE | Name of the file containing waypoints for the database being used | Any text |
| HEADING | Initial Heading for the ownship | Any float |
| PITCH | Initial Pitch for the ownship | Any float |
| ROLL | Initial Roll for the ownship | Any float |
| X_POS | Initial X position for the ownship | Any float |
| Y_POS | Initial Y position for the ownshp | Any float |
| Z_POS | Initial Z position for the ownship | Any float |

## Weapons and Dynamics Segment Generation

This section describes how the weapons and dynamics segments are created and generated via graphical modeling tools.

## Graphical Modeling Tools

The weapons and dynamics segments of the RHS have been modeled using graphical system analysis tools that have code generating capabilities. The preliminary model build-up and testing is completed in the design environment of the analysis package. When the model reaches a level where it can be integrated into the RHS, the user can invoke the code generator to link the model into the appropriate segment. The code that is generated handles the math associated with the model during each time step or frame. There is an Ada wrapper that handles the administrative duties of the segment (e.g., message handling, initialization, integrator control, and I/O). For the segments that require a higher simulation frequency the math model is executed more than once every frame. Typically, the vehicle dynamics models will be run at 60 Hz while the simulation is running at 30 Hz. Hence, for every simulation frame the dynamics model is integrated twice.

The analysis packages are graphical design tools that allow the model to be built and tested using engineering block diagram representations of the models. The models themselves describe the systems of the vehicle or weapon system using hierarchical modeling structure. This ensures that the model is readable and can be broken down and built up in manageable sections instead of the basic building blocks that the tools provide. A basic understanding of control systems and logic design is required to effectively build and understand the structure and operation of each model.

The segments currently built using this method are:

- Hellfire Dynamics
- AH64 Vehicle Dynamics

- M1A2 MBT Vehicle Dynamics
- M1A2 MBT Weapons Dynamics
- UH60 Vehicle Dynamics

These models are located in /proj/sim2000/baseline/dynamics_models under the appropriate subdirectories. There are two modeling tools that were used to generate the above segments: Boeing's Easy5x and Integrated Systems' MatrixX. Currently, the M1A2 vehicle dynamics, AH64 vehicle dynamics, and Hellfire dynamics are modeled using Easy5x while the M1A2 weapons and the UH60 vehicle dynamics are modeled using MatrixX. Due to the improved math analysis and code generating capabilities of MatrixX, all of the models should be converted to MatrixX to endure consistent design and wrapper interface. The manuals and tutorial workbooks are located in the DIS/Sim2000 lab and they are both configured to operate on Solaris OS workstations.

**Segment Generation from Easy5x Models**

Easy5x is the analysis tool originally used to adapt code generating capabilities to the host. It only generates FROTRAN code and a few things need to be performed on the resulting code in order to link it into the segment. Segment generation is currently an automated process that is invoked through the Easy5x design environment. This section will explain how to bring up Easy5x and to generate a segment using the available tools. The contact at Boeing is Howard Lohr. He can be reached at 212-865-3302 for technical assistance.

First the following changes need to be added to your environment, usually in your .cshrc file:

```
setenv EASYHOME /lic/easy5x4.0.2/easy5x
setenv EZ_RT_DIR /proj/sim2000/tools/ez_rt
setenv EASY5_COMP_LIB /proj/sim2000/tools/macros
```

Type 'easy5x &' in the directory of the model that you are working on and follow the instructions in the easy5x manual. You can perform non-realtime simulations to design the system and the instructions for that are in the manual. When you are ready to create the segment code select 'realtime mode' under the 'options' menu. Control-8 will start the code generation process by executing the 'ez_rt_build' script in the EZ_RT_DIR directory and execute the appropriate script for segment generation. The files used in segment generation include:

```
<model_name>_dyamics_ada - Assemble and compile FORTRAN files for segment generation
<model_name>_niu_ada - First portion of the FORTRAN to Ada interface
<model_name>_rst_var_ada - Last portion of the FORTRAN to Ada interface
<model_name>_together_ada - Modifies generated dynamics code for efficiency by eliminating superfluous executable commands (e.g., CONTINUE)
```

These files are used to generate the FORTRAN files that are to be linked into the segment itself. They are

```
<model_name>_NIU_ctrl.f - FORTRAN to Ada interface
<model_name>_easyins.inc - Include file that defines the data that is exchanged between the FORTRAN and Ada
<model_name>_easy5_init.f - Initialization routine called by the segment to read the model parameter file
<model_name>_motion.f- The final simulation code that has been modified for efficiency
<model_name>.dyn - Simulation parameter file
```

Control-T is the final command. Set the simulation time step to the appropriate value (usually .016666), set the plot system so no output data is collected and press the 'Execute & Close'. This will create the <model_name>. dyn parameter file that is used at runtime by executing the 'ez_rt_anal' script in the EZ_RT_DIR directory. All of the changes that you make using these methods will affect the baseline configurations. Therefore, if you wish to make experimental changes you will need to create your own directory with the appropriate files in order to not corrupt the baseline. If only parameter changes are made then the segment does not have to be regenerated. You will only need to recreate the <model_name>.dyn file. Changes that require regeneration include adding or removing a block from the model or changing the connectivity of the model.

**Segment Generation from MatrixX Models**

MatrixX is also a system analysis package but with a few significant differences. This package is much more suited to performing complex mathematical analyses on the system being evaluated. There are more tools and versatility as far as off-line simulation and model generation are concerned. It also has the ability to generate Ada and C code that can be used in the generation of the RHS segments. This section will explain how to bring up MatrixX and generate a segment using the package's environment. The contact at Integrated Systems is Gerry Clarke. He can be reached at 407-857-5790 for technical assistance. MatrixX version 5.0 is the current version which is being used to generate all vehicle and weapon dynamic models.

First the following changes need to be made in your environment, usually your.cshrc file:

    setenv ISIHOME /proj/dis1/isi
    setenv path = (Spath /proj/dis1/isi/bin)

Type xmath& in the directory where the model which you wish to modify resides. This will bring up a small window with several canvas areas and a typical menu across the top. Select File - Load. This will open a file browser with all available files shown. Select the desired model. Once loaded, a wide menu bar will be displayed with the File and Build options not greyed out. Select Build - Catalog. This will open a window displaying all available models and submodels which exist within the model loaded from the Xmath window. If the overall model name is known, select that name. This will cause the current widow to enlarge, displaying the selected model. Read the MatrixX and Xmath user's manuals to learn how to correctly manipulate the existing model or create new models.

When you are ready to generate realtime code from the current model, select Build-Generate Real -Time Code. This will open a window listing all available models and submodels. Selecting the highest model required will by default also select all sub models incorporated within that main model. After selecting the required model, change the language from C (the default) to Ada. Clicking on the next line will apply a default name to the output file. Change the name, if required. An Ada template file must exist in the current directory. Enter the name of that file on the next line. Change the Minimum Schedular Frequency from the default value to "60" and click Done. The output and status of the code generation procedure will be displayed in the Xmath window.

**Segment Generation Through the Core GUI**

The above methods are used for segment generation outside of the Core GUI environment. There is a way to bring up the design environments and perform a segment generation through the GUI. When the host configuration is displayed in the Core GUI, each of the segments has three options associated with them: Property, Parameters, and Processors. These can be accessed by placing the mouse over the segment and pressing the right button. Choosing the Parameters option on the dynamics or weapons segment will start up the appropriate systems simulation design package. The segment generation and off-line simulation capabilities of the software packages are now available to the user as if s/he were to start Easy5x or MatrixX from the command line environment. There are three files needed for this procedure to operate correctly:

    <segment_name>.param - Located in /proj/sim2000/runbase/
    easy5_<segment_name>.run - Located in /proj/sim2000/bin
    matrix_<segment_name>.run - Located in /proj/sim2000/bin

The <segment_name>.param file has a line in it that runs the appropriate *.run file depending on which modeling package was used to model the dynamics.

**Image Generator Operation**

The DIS/Sim2000 lab is configured to have access to three different areas of the facility for image generator use. These are the Mission Rehearsal lab, the AGTS IG Test Lab, and the DIS/Sim2000 lab. There is ethernet and video access to ail of these areas through the fiber optic tower in the lab. The ethernet connection into the host computer should be a dedicated line that has had its transmit and receive lines swapped. The host computer must have at least a second ethernet port through which the visual segment of the RHS communicates to the image generator (IG). This second port (usually le1) must be configured to be on a subnet different than that of the main ethernet port (usually le0) in order to prevent misrouting of the IG update packets. The host is on the DIS subnet (le0). The two subnets currently being used for the IGs are the AGTS subnet and the Mission Rehearsal subnet. The IP addresses that are valid for these subnets can be found by executing the following command: ypcat hosts > host_table. Edit host_table and find the subnet breakdown.

The RHS system requires at least 3 out-the-window channels and a sensor channel for the TIS on the M1A2 gunner station and the FLIR for the AH64 or five out-the-window channels for the UH60. The plasma displays require separate vertical and horizontal syncs and the smaller CRT monitors use composite sync.

There is a help file for the IG setup. It can be executed by going to /proj/sim2000/help and typing ighelp. Execute the file and enter the choices for the IG in use. The output describes the step by step process for bringing up the IG. An SE reference manual is located in the DIS/Sim2000 lab for operation of the Operator Interface Control (OIC) for the IG. To load a database execute the following commands in the OIC:

1) Using the right mouse button click on the Reset Menu and select Realtime with the left mouse button.
2) Wait for the initialization to complete (a test pattern with rocket vapor trails indicates it is complete).
3) Using the right mouse button click on the Control File Util Menu, slide over to the Command Tree, slide over to the database you want to load, and the use the push pin to hold the menu in place.
4) Using the left mouse button select the Load <database>.

**Instrumentation Operation**

The instrumentation for the RHS system is generated by a system developed by Terabit (now owned by Evans & Sutherland) which is housed in a PC. Update information is sent to the PC over a third ethernet port on the host computer. The PC will generate its own video which can then be routed to the reconfigurable system's instrumentation displays.

The RHS broadcasts instrumentation data over a dedicated ethernet line which is picked up by the PC via raw ethernet packets. The third ethernet port (currently qe2) must be on a different subnet than the other ethernet ports in order to avoid misrouting of instrumentation update packets.

Data that is collected by the corresponding instrumentation segment must be byte swapped where appropriate in order for the PC to correctly decode the ethernet packets. This is due to Big Endian/Little Endian architectural differences in the platforms. There are routines in the RHS that will perform the byte swapping and examples of their use can be found in the individual instrumentation segments.

Currently, the Terabit hardware is capable of generating three independent channels of video. For the AH64 instruments, one channel is used for traditional system instruments, the second is mixed with IG video for a heads up display (HUD), and the third channel is unused. For the M1A2 instruments, one channel is used for GCDP instruments, the second channel is mixed for reticle generation, and third channel is unused. For the UH60, all three channels are used for traditional system instruments. The commands to turn on the mixer are done in the autoexec.bat file in the instrumentation PC.

In order to load the M1A2 instruments enter the following commands:

1) cd c:\avids\baseline\m1a2.prj.
2) runm1a2

To load the AH64 instruments skip steps 1 and 2 and enter the following:

3) cd c:\avids\baseline\aph.prj
4) runaph

To load the UH60 instruments skip steps 1-4 and enter the following:

5) cd c:\avids\baseline\uh60.prj
6) runuh

Once the system is loaded, all the instruments are edited in the same manner. The system will load a default configuration for each instrument on startup which can be modified using the following keys:

T - Translate and object to another position on the display
Z - Zoom in
X - Zoom out
A - Add object/De-Iconify object
D - Delete object/Iconfiy object
S - Save current configuration
L - Load saved configuration
C - Change from one video channel to another
E - Turn of Edit mode
I - Move cursor up

M - Move cursor down
J - Move cursor left
K - Move cursor right
Space bar - Select/Unselect objects

Pressing T will put the system in Edit Mode. The cursor will start out in the first channel so if you want to make any changes to the instrumentation displays you will need to switch channels by pressing C. A cursor and icon bar will appear in one channel. The I, M, J, and K keys are used to move the cursor around the display. To modify and object, position the cursor over the object, press the key for the desired action, and then press the space bar to select the object. For example, to move a gauge the user would move the cursor over the gauge, press T and then the space bar. By using the I, M, J, and K keys the gauge can now be moved around the display. When satisfied with the new position, press the space bar again to deselect the gauge. Each option functions in a similar manner to Translate. When editing is complete, pressing E will turn off the cursor and icon bar. Optionally, the mouse can be used instead of the keyboard. For a more detailed description of the instrumentation system refer to following documents: *MARS21 Instrumentation User's Guide, MARS21 Instrumentation Developer's Guide,* and *MARS21 Instrumentation Systems Manual.*

**Claims**

1. A reconfigurable simulator comprising:

   a base representing a platform to be simulated;
   a control unit coupled to the base;
   a plurality of hardware modules, wherein the control unit includes a storage medium wherein a plurality of software based control modules is stored and accessible by the control unit, **characterised in that** the plurality of hardware modules are removably engageable with the base, wherein the modules present a differing simulation environment corresponding to the platform to a user and wherein some members of the plurality of hardware modules are adapted to interact with respective ones of the control modules thereby enabling the control unit to present to a user a plurality of different simulation experiences as the platform moves in a simulated environment and wherein the control unit includes an icon driven configuration editor for modifying characteristics of the platform.

2. A reconfigurable simulator as in claim 1 wherein the control unit includes a plurality of graphical display system control modules wherein each member of the plurality is associated with and adapted to drive a respective output display generator for real-time presentation of a selected simulated environment adjacent to the base and wherein a generator can be selected in accordance with a desired degree of simulation fidelity.

3. A reconfigurable simulator as in claim 2 wherein the control unit includes circuitry and instrument displays for real-time presentation of instrument outputs for the platform as the platform traverses the selected environment.

4. A reconfigurable simulator as in claim 3 wherein different control modules correspond to different platforms and which include a mechanical template corresponding to a plurality of different display devices for a selected platform, wherein platform display devices are simulated by a selected control module and presented to the user aligned with openings in the template thereby providing selected instruments as would be seen by a user in the platform.

5. A reconfigurable simulator as in claim 4 which includes a second base, coupled to the control unit wherein the two bases together represent a control area of a platform to be simulated, wherein the base has one plurality of hardware modules coupled thereto and the second base has a second plurality of hardware modules coupled thereto.

6. A reconfigurable simulator as in claim 4 which includes a removable, platform specific, bezel which overlies, at least in part, the template.

7. A reconfigurable simulator as in claim 1, which includes a second plurality of hardware modules, removably engageable with the base wherein the modules, when so engaged, present a second simulation environment corresponding to a second platform.

8. A reconfigurable simulator as in claim 7 which includes a second template.

9. A reconfigurable simulator as in claim 7 which includes a second bezel.

10. A reconfigurable simulator as in claim 1 wherein the base includes at least two, substantially identical, manually operable vehicle modules each having a plurality of instrument module receiving ports;

wherein the modules include first and second pluralities of interchangeable instrument modules wherein the members of the pluralities correspond to instruments and control elements for a vehicle in a class which includes an airborne vehicle, a land vehicle, and a waterborne vehicle wherein the members of the two pluralities are removably received in respective module receiving ports so as to configure both of the control modules to visually correspond to the interior appearance of the selected vehicle with at least some of the instrument modules carrying manually operable control elements corresponding to those in the selected vehicle and wherein the vehicle modules can be arranged relative to one another to correspond to the physical layout of the selected vehicle; and
wherein the control unit includes circuits for storage of instructions for simulating in real-time, at least in part, the vehicles from the class.

11. A reconfigurable simulator as in claim 10 wherein each module includes a vehicle display unit for displaying thereon simulated instruments of a type associated with a selected vehicle.

12. A reconfigurable simulator as in claim 11 wherein the control unit includes instructions enabling a system control person to modify characteristics of the selected vehicle prior to and during a simulation.

13. A reconfigurable simulator as in claim 11 wherein the control unit includes instructions enabling a system control person to establish mission characteristics selected from a class which includes geography, weather, location and arrangement of other vehicles in a selected region of the geography, foliage and lighting.

14. A reconfigurable simulator as in claim 10 which includes a common control console removably coupled to the control unit, and positioned between spaced apart vehicle modules.

15. A reconfigurable simulator as in claim 13 which includes a plurality of out the window display units, coupled to the control unit and configurable in accordance with characteristics of the selected vehicle wherein the control unit includes further instructions for the visual, real time, presentation of exterior displays for a vehicle operator in at least one of the modules in accordance with the selected mission characteristics.

16. A method of simulating a platform as in claim 1 comprising:

specifying platform characteristics including specifying platform propulsion characteristics, platform dynamic characteristics, platform environmental sensing characteristics;
creating a configuration file including interconnected modular segments corresponding to the specified characteristics;
converting the interconnected segments to executable, software modules;
providing a base corresponding to a single crewstation of the platform wherein a plurality of hardware modules are removably engageable with the base, said hardware modules including a window display device and instrument display;
coupling to the base a window display device intended to provide a display of an adjacent simulated terrain;
coupling to the base an instrument display for displaying a plurality of simulated instruments arranged in a predetermined fashion;
covering the instrument display, at least in part with a template having a plurality of openings arranged to be in register with the plurality of simulated instruments, thereby providing a simulated instrument panel;
coupling the executable modules to the displays; and
initiating execution of the modules.

17. A method as in claim 16 wherein the creating step includes adding to the configuration file a previously created segment from a configuration file for a different simulatable platform;

18. A method as in claim 16 which includes in the creating step, generating a graphical display of the configuration file.

19. A method as in claim 18 wherein the created graphical, configuration display is in the form of a flow diagram.

**20.** A method as in claim 18 which includes adding a new segment to the graphical display and interconnecting the new segment with at least one segment already present in the configuration file thereby creating a modified configuration file.

**21.** A method as in claim 20 which includes compiling the new segment to create an executable module.

**22.** A method as in claim 17 which includes editing the previously created segment to form an edited segment.

**23.** A method as in claim 22 which includes recompiling the edited segment.


**Patentansprüche**

**1.** Rekonfigurierbarer Simulator, aufweisend:

eine Basis, die eine zu simulierende Plattform darstellt;
eine mit der Basis gekoppelte Steuereinheit;
eine Anzahl von Hardwaremodulen, wobei die Steuereinheit ein Speichermedium aufweist, in dem eine Anzahl Software-gestützter Steuermodule gespeichert ist und das für die Steuereinheit zugänglich ist, **dadurch gekennzeichnet, dass** die Anzahl an Hardwaremodulen mit der Basis entfernbar in Eingriff bringbar ist, wobei die Module einem Benutzer eine sich ändernde Simulationsumgebung entsprechend der Plattform zeigen, wobei einige Elemente der Anzahl an Hardwaremodulen dafür ausgelegt sind, mit jeweiligen der Steuermodule wechselzuwirken, wodurch es der Steuereinheit ermöglicht wird, einem Benutzer eine Vielzahl verschiedener Simulationserfahrungen zu zeigen, wenn sich die Plattform in einer simulierten Umgebung bewegt, und wobei die Steuereinheit einen durch Icons angesteuerten Konfigurationseditor zum Modifizieren von Merkmalen der Plattform beinhaltet.

**2.** Rekonfigurierbarer Simulator nach Anspruch 1, **dadurch gekennzeichnet, dass** die Steuereinheit eine Anzahl an Steuermodulen für ein graphisches Anzeigesystem aufweist, wobei jedes Element der Anzahl einem jeweiligen Ausgabeanzeigegenerator für eine Echtzeitdarstellung einer ausgewählten simulierten Umgebung benachbart der Basis zugeordnet ist und für dessen Ansteuerung ausgelegt ist und wobei ein Generator gemäß einem gewünschten Grad an Simulationswiedergabegetreue ausgewählt werden kann.

**3.** Rekonfigurierbarer Simulator nach Anspruch 2, **dadurch gekennzeichnet, dass** die Steuereinheit eine Schaltung und Instrumentenanzeigen für Echtzeitdarstellung von Instrumentenausgängen für die Plattform, wenn die Plattform die ausgewählte Umgebung durchläuft, aufweist.

**4.** Rekonfigurierbarer Simulator nach Anspruch 3, **dadurch gekennzeichnet, dass** verschiedene Steuermodule verschiedenen Plattformen entsprechen und eine mechanische Schablone aufweisen, die einer Anzahl an verschiedenen Anzeigevorrichtungen für eine ausgewählte Plattform entspricht, wobei Plattformanzeigevorrichtungen von einem ausgewählten Steuermodul simuliert und dem Benutzer ausgerichtet mit Öffnungen in der Schablone gezeigt werden, wodurch ausgewählte Instrumente bereitgestellt werden, wie sie von einem Benutzer in der Plattform gesehen würden.

**5.** Rekonfigurierbarer Simulator nach Anspruch 4, der eine zweite Basis aufweist, die mit der Steuereinheit gekoppelt ist, wobei die beiden Basen zusammen einen Steuerbereich einer zu simulierenden Plattform darstellen, wobei die Basis eine Anzahl an mit ihr gekoppelten Hardwaremodulen aufweit und die zweite Basis eine zweite Anzahl an mit ihr gekoppelten Hardwaremodulen aufweist.

**6.** Rekonfigurierbarer Simulator nach Anspruch 4, der eine entfernbare plattformspezifische Blende aufweist, die zumindest teilweise über die Schablone gelegt ist.

**7.** Rekonfigurierbarer Simulator nach Anspruch 1, der eine zweite Anzahl an Hardwaremodulen aufweist, die mit der Basis entfernbar in Eingriff bringbar sind, wobei die Module, wenn sie so in Eingriff gebracht sind, entsprechend einer zweiten Plattform eine zweite Simulationsumgebung zeigen.

**8.** Rekonfigurierbarer Simulator nach Anspruch 7, der eine zweite Schablone aufweist.

**9.** Rekonfigurierbarer Simulator nach Anspruch 7, der eine zweite Blende aufweist.

**10.** Rekonfigurierbarer Simulator nach Anspruch 1, **dadurch gekennzeichnet, dass** die Basis mindestens zwei im Wesentlichen identische, manuell betätigbare Fahrzeugmodule aufweist, von denen jedes eine Anzahl an Aufnahmeanschlüssen für Instrumentenmodule aufweist;
wobei die Module eine erste und eine zweite Anzahl an austauschbaren Instrumentmodulen aufweisen, wobei die Elemente der Anzahl Instrumenten und Steuerelementen für ein Fahrzeug in einer Klasse entsprechen, die ein Luftfahrzeug, ein Landfahrzeug und ein Wasserfahrzeug umfasst, wobei die Elemente der beiden Anzahlen entfernbar in jeweiligen Modulaufnahmeanschlüssen aufgenommen sind, um beide Steuermodule zu konfigurieren, so dass sie visuell der Innenansicht des ausgewählten Fahrzeugs entsprechen, wobei zumindest einige der Instrumentmodule manuell betätigbare Steuerelemente tragen, die jenen im ausgewählten Fahrzeug entsprechen, und wobei die Fahrzeugmodule in Bezug aufeinander angeordnet werden können, um dem physischen Aufbau des ausgewählten Fahrzeugs zu entsprechen; und
wobei die Steuereinheit Schaltungen zur Speicherung von Anweisungen zum zumindest teilweisen Simulieren der Fahrzeuge aus der Klasse in Echtzeit aufweist.

**11.** Rekonfigurierbarer Simulator nach Anspruch 10, **dadurch gekennzeichnet, dass** jedes Modul eine Fahrzeuganzeigeeinheit aufweist, um darauf simulierte Instrumente einer Art anzuzeigen, die einem ausgewählten Fahrzeug zugeordnet ist.

**12.** Rekonfigurierbarer Simulator nach Anspruch 11, **dadurch gekennzeichnet, dass** die Steuereinheit Anweisungen aufweist, die es einer das System steuernden Person ermöglichen, Merkmale des ausgewählten Fahrzeugs vor und während einer Simulation zu verändern.

**13.** Rekonfigurierbarer Simulator nach Anspruch 11, **dadurch gekennzeichnet, dass** die Steuereinheit Anweisungen aufweist, die es einer das System steuernden Person ermöglichen, Einsatzmerkmale zu schaffen, die aus einer Klasse ausgewählt sind, welche Geographie, Wetter, Standort und Anordnung anderer Fahrzeuge in einer ausgewählten Region der Geographie, Laub und Lichtverhältnisse umfasst.

**14.** Rekonfigurierbarer Simulator nach Anspruch 10, der eine gemeinsame Steuerkonsole aufweist, die entfernbar mit der Steuereinheit gekoppelt und zwischen beabstandeten Fahrzeugmodulen positioniert ist.

**15.** Rekonfigurierbarer Simulator nach Anspruch 13, der eine Anzahl aus den Fensteranzeigeeinheiten aufweist, die mit der Steuereinheit gekoppelt und gemäß Merkmalen des ausgewählten Fahrzeugs konfiguriert sind, wobei die Steuereinheit desweiteren Anweisungen für die visuelle Echtzeitdarstellung von äußeren Anzeigen für eine Bedienungsperson des Fahrzeugs in mindestens einem der Module gemäß den ausgewählten Einsatzmerkmalen umfasst.

**16.** Verfahren zum Simulieren einer Plattform nach Anspruch 1, aufweisend:

Spezifizieren von Plattformmerkmalen einschließlich dem Spezifizieren von Plattformvortriebsmerkmalen, Merkmalen der Plattformdynamik, Erfassungsmerkmalen für die Plattformumgebung;
Schaffen eines Konfigurationsfiles einschließlich der miteinander verbundenen modularen Segmente entsprechend der spezifizierten Merkmale;
Umwandeln der miteinander verbundenen Segmente in ausführbare Softwaremodule;
Schaffen einer Basis, die einer einzelnen Mannschaftsstation der Plattform entspricht, wobei eine Anzahl an Hardwaremodulen entfernbar mit der Basis in Eingriff bringbar sind, wobei die Hardwaremodule eine Fensteranzeigevorrichtung und eine Instrumentenanzeige umfassen;
Koppeln einer Fensteranzeigevorrichtung, die dafür gedacht ist, eine Anzeige eines angrenzenden simulierten Geländes bereitzustellen, mit der Basis;
Koppeln einer Instrumentenanzeige zum Anzeigen einer Anzahl an simulierten Instrumenten, die auf eine vorgegebene Art angeordnet sind, mit der Basis;
Abdecken der Instrumentanzeige zumindest teilweise mit einer Schablone, die eine Anzahl an Öffnungen aufweist, die so angeordnet sind, dass die passgenau zu der Anzahl an simulierten Instrumenten sind, wodurch eine simulierte Instrumententafel geschaffen wird;
Koppeln der ausführbaren Module an die Anzeigen; und
Starten der Ausführung der Module.

**17.** Verfahren nach Anspruch 16, **dadurch gekennzeichnet, dass** der Schritt des Schaffens das Hinzufügen eines zuvor aus einem Konfigurationsfile für eine andere simulierbare Plattform geschaffenen Segments zu dem Konfigurationsfile umfasst.

**18.** Verfahren nach Anspruch 16, das unter dem Schritt des Schaffens das Erzeugen einer graphischen Anzeige des Konfigurationsfiles umfasst.

**19.** Verfahren nach Anspruch 18, **dadurch gekennzeichnet, dass** die geschaffene graphische Konfigurationsanzeige in Form eines Flussdiagrammes vorliegt.

**20.** Verfahren nach Anspruch 18, das das Hinzufügen eines neuen Segments zur graphischen Anzeige und das Verbinden des neuen Segments mit mindestens einem bereits im Konfigurationsfile vorhandenen Segment umfasst, wodurch ein modifiziertes Konfigurationsfile geschaffen wird.

**21.** Verfahren nach Anspruch 20, das das Kompilieren des neuen Segments umfasst, um ein ausführbares Modul zu schaffen.

**22.** Verfahren nach Anspruch 17, das das Editieren des zuvor geschaffenen Segments umfasst, um ein editiertes Segment zu bilden.

**23.** Verfahren nach Anspruch 22, das das Rekompilieren des editierten Segments umfasst.


**Revendications**

**1.** Simulateur reconfigurable comprenant :

une base représentant une plate-forme à simuler ;
une unité de commande couplée à la base ;
une pluralité de modules matériels, l'unité de commande comprenant un support de stockage dans lequel une pluralité de modules de commande basés sur un logiciel est stockée et accessible par l'unité de commande, **caractérisé en ce que** la pluralité de modules matériels peuvent être mis en prise avec la base de manière amovible, les modules présentant à un utilisateur un environnement de simulation différent correspondant à la plate-forme et certains des modules parmi la pluralité de modules matériels étant adaptés pour interagir avec des modules respectifs parmi les modules de commande, permettant de ce fait à l'unité de commande de présenter à un utilisateur une pluralité d'expériences de simulation différentes tandis que la plate-forme se déplace dans un environnement simulé et où l'unité de commande comprend un éditeur de configuration commandé par des icônes pour modifier les caractéristiques de la plate-forme.

**2.** Simulateur reconfigurable selon la revendication 1, dans lequel l'unité de commande comprend une pluralité de modules de commande de systèmes d'affichage graphique dans laquelle chaque élément de cette pluralité est associé à et adapté pour entraîner un générateur d'affichage de sortie respectif pour la présentation en temps réel d'un environnement simulé choisi adjacent à la base et dans laquelle un générateur peut être choisi en fonction d'un degré souhaité de fidélité de simulation.

**3.** Simulateur reconfigurable selon la revendication 2, dans lequel l'unité de commande comprend des circuits et des affichages d'instruments pour la présentation en temps réel de sorties d'instruments pour la plate-forme pendant que la plate-forme traverse l'environnement choisi.

**4.** Simulateur reconfigurable selon la revendication 3, dans lequel différents modules de commande correspondent à différentes plates-formes et comprennent un gabarit mécanique correspondant à une pluralité de dispositifs d'affichage différents pour une plate-forme choisie, les dispositifs d'affichage de plate-forme étant simulés par un module de commande choisi et présentés à l'utilisateur alignés avec des ouvertures du gabarit pour fournir de ce fait des instruments choisis tels qu'ils seraient vus par un utilisateur dans la plate-forme.

**5.** Simulateur reconfigurable selon la revendication 4 qui comprend une deuxième base, couplée à l'unité de commande, les deux bases représentant ensemble une zone de commande d'une plate-forme à simuler, la base ayant une pluralité de modules matériels couplés à celle-ci et la deuxième base ayant une deuxième pluralité de modules matériels couplés à celle-ci.

**6.** Simulateur reconfigurable selon la revendication 4 qui comprend une lunette amovible spécifique à une plate-forme, qui recouvre, au moins en partie, le gabarit.

**7.** Simulateur reconfigurable selon la revendication 1 qui comprend une deuxième pluralité de modules matériels, qui peuvent être mis en prise avec la base et où les modules, lorsqu'ils sont ainsi en prise, présentent un deuxième environnement de simulation correspondant à une deuxième plate-forme.

**8.** Simulateur reconfigurable selon la revendication 7 qui comprend un deuxième gabarit.

**9.** Simulateur reconfigurable selon la revendication 7 qui comprend une deuxième lunette.

**10.** Simulateur reconfigurable selon la revendication 1 dans lequel la base comprend au moins deux modules de véhicule sensiblement identiques et actionnables manuellement comportant chacun une pluralité de ports pour module d'instrument ;

dans lequel les modules comprennent une première et une deuxième pluralité de modules d'instruments interchangeables, les éléments des pluralités correspondant aux instruments et éléments de commande pour un véhicule d'une classe qui comprend un véhicule volant, un véhicule roulant, et un véhicule flottant, les éléments des deux pluralités étant reçus de manière amovible dans des ports pour module respectifs afin de configurer les deux modules de commande pour qu'ils correspondent visuellement à l'apparence intérieure du véhicule choisi avec au moins certains des modules d'instrument portant des éléments de commande actionnables manuellement correspondant à ceux du véhicule choisi et où les modules du véhicule peuvent être agencés les uns par rapport aux autres pour correspondre à la disposition physique du véhicule choisi ; et

dans lequel l'unité de commande comprend des circuits pour le stockage d'instructions servant à la simulation en temps réel, au moins en partie, des véhicules de la classe.

**11.** Simulateur reconfigurable selon la revendication 10 dans lequel chaque module comprend une unité d'affichage de véhicule pour afficher des instruments simulés d'un type associé à un véhicule choisi.

**12.** Simulateur reconfigurable selon la revendication 11 dans lequel l'unité de commande comprend des instructions permettant à une personne de commande du système de modifier les caractéristiques du véhicule choisi avant et pendant une simulation.

**13.** Simulateur reconfigurable selon la revendication 11 dans lequel l'unité de commande comprend des instructions permettant à une personne de commande du système d'établir des caractéristiques de mission choisies dans une classe qui comprend la topographie, le temps, l'emplacement et la disposition d'autres véhicules dans une région choisie de la topographie, le feuillage et l'éclairage.

**14.** Simulateur reconfigurable selon la revendication 10 qui comprend une console de commande commune couplée de manière amovible à l'unité de commande, et positionnée entre des modules de véhicule espacés.

**15.** Simulateur reconfigurable selon la revendication 13 qui comprend une pluralité d'unités d'affichage derrière la fenêtre, couplées à l'unité de commande et configurables en fonction des caractéristiques du véhicule choisi, l'unité de commande comportant en outre des instructions pour la présentation visuelle en temps réel d'affichages extérieurs pour un opérateur du véhicule dans au moins un des modules en fonction des caractéristiques de mission choisies.

**16.** Procédé de simulation d'une plate-forme conforme à la revendication 1, comprenant les étapes consistant à :

spécifier des caractéristiques de la plate-forme qui comprennent les caractéristiques de propulsion de la plate-forme, les caractéristiques dynamiques de la plate-forme, les caractéristiques de détection de l'environnement de la plate-forme ;

créer un fichier de configuration comportant des segments modulaires interconnectés correspondants aux caractéristiques spécifiées ;

convertir les segments interconnectés en des modules logiciels exécutables ;

fournir une base correspondant à un poste d'équipage simple de la plate-forme, une pluralité de modules matériels pouvant être mis en prise de manière amovible avec la base, lesdits modules matériels incluant un dispositif d'affichage de fenêtre et un afficheur d'instruments ;
coupler à la base un dispositif d'affichage de fenêtre destiné à fournir un affichage d'un terrain simulé adjacent ;
coupler à la base un afficheur d'instruments pour afficher une pluralité d'instruments simulés agencés d'une façon préalablement déterminée ;
couvrir l'afficheur d'instruments au moins en partie avec un gabarit ayant une pluralité d'ouvertures placées de façon à être en correspondance avec la pluralité d'instruments simulés, constituant de ce fait un tableau de bord simulé ;
coupler les modules exécutables aux afficheurs ; et
amorcer l'exécution des modules.

17. Procédé selon la revendication 16 dans lequel l'étape de création comprend le fait d'ajouter au fichier de configuration un segment créé plus tôt à partir d'un fichier de configuration pour une plate-forme de simulation différente.

18. Procédé selon la revendication 16 qui comprend, dans l'étape de création, le fait de produire un affichage graphique du fichier de configuration.

19. Procédé selon la revendication 18 dans lequel l'affichage graphique de configuration créé se fait sous forme d'un organigramme.

20. Procédé selon la revendication 18 qui comprend le fait d'ajouter un nouveau segment à l'affichage graphique et d'interconnecter ce nouveau segment avec au moins un segment déjà présent dans le fichier de configuration, créant de ce fait un fichier de configuration modifié.

21. Procédé selon la revendication 20 qui comprend le fait de compiler le nouveau segment afin de créer un module exécutable.

22. Procédé selon la revendication 17 qui comprend le fait d'éditer le segment créé plus tôt afin de former un segment édité.

23. Procédé selon la revendication 22 qui comprend le fait de recompiler le segment édité.

## FIG. 1A

DEVICE SPECIFIC HARDWARE

COCKPIT I/O — 48a, b    IMAGE GENERATOR — 20    DISPLAYS — 52    WEAPONS — 30e
INSTRUMENTATION SYSTEM    AUDIO SYSTEM    ELECTRONIC WARFARE

30    30c    18a    18b    18c

| COMM. SEG. | ELECT. WAR. SEG. | CONTROL SEGMENT | INSTRUMENT SEGMENT | NAVIGATION SEGMENT |
|---|---|---|---|---|

18e    18d    30a    30b    HARDWARE INTERFACE

18f

| VEHICLE PROP. SEGMENT | VEHICLE DYNAMICS SEGMENT | WEAPONS SEGMENT | RADAR SEG. | | MANAGER SEGMENT | ENVIRON. SEGMENT |
|---|---|---|---|---|---|---|

18g    18h    18i    18j    18k    OBJECT MODELS

18

| MISSION FUNCTION SEGMENT | VISUAL SEGMENT |
|---|---|

18l    SUPPORT CLASS

18n

| DIS I/O | | REMOTE CSL SEGMENTS |
|---|---|---|

18m    18o    NETWORK INTERFACE SEGMENTS

| CORE SERVICES LAYER |
|---|

16

| OPERATING SYSTEM |
|---|

EP 0 872 819 B1

FIG. 1B

K1

K2

Kn

SLED 1
30
24
EID

PLATF.
INST. DISP.

INSTR./
DISP. PROC.

22

OTW
DISP.

52

IMAGE
GENERATOR

20

COMMUN.
UNIT

26

48a, b

SLED
2

EITHERNET
LAN

INSTR.
COUNSEL

HOST
12

12-1

12-2

12-n

DIS
LAN

VIRTUAL NETWORK

16a

10

EP 0 872 819 B1

36

# FIG. 1C

# FIG. 10

VEHICLE DYNAMICS SEGMENT

TURRET & BARREL POSITION

VEHICLE STATE VECTOR

AZMUTH & ELEVATION

TURRET & BARREL STABILIZER

VEHICLE ORIENTATION

THROTTLE → ENGINE

LOAD TORQUE

TRANS-MISSION & BRAKE

TRANS. SPEED & TORQUE

VEHICLE POSITION & ORIENTATION

SUSPENSION

EQUATIONS OF MOTION

TORQUE & SPEED

BRAKE POSITION & GEAR

TRANS. LOAD TORQUE

VEHICLE ACCELERATIONS

TRANSMISSION SPEED

STEERING POSITION

TRACTION & STEERING

TRACK SPEEDS

TERRAIN INPUTS

CANNON FIRE

EP 0 872 819 B1

FIG. 2

HARDWARE COMPONENT
## FIG. 2A  BREAKDOWN-HELICOPTER

DISPLAY STRUCTURE

FLAT PANEL PLASMA DISPLAYS

FRONT CONSOLE

INSTRUMENT BEZELS

FLIGHT CONTROLS

UNIVERSAL BASE

SELECTIVE FIDELITY CONTROL PANELS

SIDE CONSOLE

I/O AND GRAPHICS SUBSYSTEM

BASE (PLATFORM)

COMMUNICATION SUBSYSTEM

# FIG. 3

60

52-1

FLAT PANEL PLASMA OUT
THE WINDOW DISPLAY

SENSOR IG DISPLAY

52-2

48-1

GRAPHICS
INSTR.
FLAT PANEL
PLASMA
DISPLAY

44-1

49-1

44-2

GRAPHICS
INSTR.
FLAT PLANEL
PLASMA
DISPLAY

I/O & GRAPHICS &
COM DEVICES
40

30-1

30-2

EP 0 872 819 B1

FIG. 3A    AH64 CONFIGURATION

FLAT PANEL OUT-THE-WINDOW DISPLAYS

HIGH FIDELITY FLIGHT CONTROLS

COPILOT GUNNER OPT. RELAY TUBE

GRAPHIC INSTRUMENTS FLAT PANEL DISPLAY

PILOT SIDE CONSOLE

EP 0 872 819 B1

FIG. 4

48b

62b

62a

62

# FIG. 5

63-1 FIRE EXTINGUISHER BOTTLE SELECT SWITCH
63-2 ENGINE FIRE PULL HANDLES
63-3 MASTER CAUTION, WARNING PANEL
63-4 AIRSPEED INDICATOR
63-5 REMOTE ATTITUDE INDICATOR
63-6 RADIO CALL PLACARD
63-7 STABILATOR POSITION INDICATOR
63-8 STABILATOR/AIRSPEED PLACARD
63-9 RADIO MAGNETIC INDICATOR (RMI)
63-10 VERTICAL SPEED INDICATOR (VSI)
63-11 CLOCK
63-12 CAUTION/WARNING PANEL
63-13 BAROMETRIC ALTIMETER
63-14 ENGINE (Np), ROTOR (NR) INDICATOR
63-15 ENGINE TORQUE INDICATOR
63-16 SELECTABLE DIGITAL DISPLAY PANEL
63-17 FIRE CONTROL PANEL
63-18 CANOPY JETTISON HANDLE
63-19 ARM SAFE INDICATOR
63-20 ENGINE INSTRUMENT DIM/TEST PANEL
63-21 FUEL TRANSFER INDICATOR

# FIG. 6

48-1

VIDEO REPEATER

48-2

DISPLAY SYSTEM

DISPLAY SYSTEM

20

SE-1000 IMAGE GENERATOR

PC-TERABIT GRAPHICS INSTRUMENTS

-20h-2

SE-1000 IMAGE GENERATOR

PC-TERABIT GRAPHICS INSTRUMENTS

22-1

12-1

SUN SPARC-20 HOST-1

SUN SPARC-20 HOST-1

12-2

46-1

MODULAR I/O DEVICES

MODULAR I/O DEVICES

30-2

30-1

CREW STATION #1

CREW STATION #2

SYSTEM 1

SYSTEM 2

LAN

EP 0 872 819 B1

45

## FIG. 7

FLAT PANEL PLASMA OUT
THE WINDOW DISPLAY

GRAPHICS INSTRUMENTS FLAT
PANEL PLASMA DISPLAY

80

84b

36

82a

82c

82b

**FIG. 7A**    UH60 CONFIGURATION

OVERHEAD CONSOLE

FLAT PANEL OUT-THE-WINDOW DISPLAYS

GRAPHICS INSTRUMENTS FLAT PANEL DISPLAY

HIGH FIDELITY FLIGHT CONTROLS

BACKLIT CENTER CONSOLE

47

FIG. 8

FIG. 9

# FIG. 10

MESSAGE BUS TYPES

# FIG. 11

EP 0 872 819 B1

# FIG. 12

M1    M1A2    M60    m1a1_fb

m1a1_rs    reconf

# FIG. 13

ah64_dynamics_main    ah64_weapons_main    control_main    data_collect

dis_io_main    enviroment_main    m1a1_dynamics_main    m1a1_weapons_main

manager_main    message_logger    message.playback    miss_func_main

remote_send    rs422_main    visual_main